# EUROPEAN PATENT APPLICATION

(11) **EP 4 832 397 A1**
(43) Date of publication of application: **28.10.2026**
(21) Application number: 24908188.6
(22) Date of filing: 20.12.2024
(51) Int. Cl.: H04L 5/00, H04W 4/70, H04W 72/0446, H04W 72/11, H04W 72/1268, H04W 72/232, H04W 72/51

(54) **METHOD AND DEVICE FOR PERFORMING COMMUNICATION IN WIRELESS COMMUNICATION SYSTEM**

(30) Priority: 22.12.2023 KR 20230190122; 11.03.2024 KR 20240033922; 26.08.2024 KR 20240113984; 19.11.2024 US 202463722528 P
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR); PARK, Hanjun, Seoul 06772 (KR)
(74) Representative: Frenkel, Matthias Alexander
(86) International application number: PCT/KR2024/020869
(87) International publication number: WO 2025/135906

(57) **Abstract**

A method of a first device, and a device for supporting same are provided. The method may comprise the steps of acquiring a random sequence; acquiring, a first demodulation reference signal (DMRS) sequence on the basis of applying, to the random sequence, a first orthogonal cover code (OCC) repeated on the basis of the length of the first OCC; and acquiring a second DMRS sequence on the basis of applying, to the first DMRS sequence, the second OCC repeated on the basis of the length of the second OCC.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL PROBLEM

The present disclosure provides a method and device capable of effectively providing services in a wireless communication system. In particular, the present disclosure provides a method and device for communication.

### TECHNICAL SOLUTION

Based on an embodiment, a method performed by a first device may be provided. The method may include: obtaining a random sequence; obtaining a first demodulation reference signal (DMRS) sequence based on applying a first orthogonal cover code (OCC) that is repeated based on a length of the first OCC to the random sequence; and obtaining a second DMRS sequence based on applying a second OCC that is repeated based on a length of the second OCC to the first DMRS sequence.

Based on an embodiment, a first device may be provided. The first device may include: at least one transceiver; at least one processor; and at least one memory connected to the at least one processor and storing instructions, and the instructions, based on being executed by the at least one processor, may cause the first device to perform operations comprising: obtaining a random sequence; obtaining a first demodulation reference signal (DMRS) sequence based on applying a first orthogonal cover code (OCC) that is repeated based on a length of the first OCC to the random sequence; and obtaining a second DMRS sequence based on applying a second OCC that is repeated based on a length of the second OCC to the first DMRS sequence.

Based on an embodiment, a processing device adapted to control a first device may be provided. For example, the processing device may include: at least one processor; and at least one memory connected to the at least one processor and storing instructions, and the instructions, based on being executed by the at least one processor, may cause the first device to perform operations comprising: obtaining a random sequence; obtaining a first demodulation reference signal (DMRS) sequence based on applying a first orthogonal cover code (OCC) that is repeated based on a length of the first OCC to the random sequence; and obtaining a second DMRS sequence based on applying a second OCC that is repeated based on a length of the second OCC to the first DMRS sequence.

Based on an embodiment, a non-transitory computer-readable storage medium storing instructions may be provided. The instructions, based on being executed, may cause a first device to perform operations comprising: obtaining a random sequence; obtaining a first demodulation reference signal (DMRS) sequence based on applying a first orthogonal cover code (OCC) that is repeated based on a length of the first OCC to the random sequence; and obtaining a second DMRS sequence based on applying a second OCC that is repeated based on a length of the second OCC to the first DMRS sequence.

Based on an embodiment, a method performed by a second device may be provided. The method may include: receiving a demodulation reference signal (DMRS) on a narrow physical uplink shared channel (NPUSCH). For example, the DMRS may be based on a second DMRS sequence. For example, the second DMRS sequence may be obtained based on applying the second OCC that is repeated based on a length of the second OCC to a first DMRS sequence. For example, the first DMRS sequence may be obtained based on applying the first OCC that is repeated based on a length of the first OCC to a random sequence.

Based on an embodiment, a second device may be provided. The second device may include: at least one transceiver; at least one processor; and at least one memory connected to the at least one processor and storing instructions, and the instructions, based on being executed by the at least one processor, may cause the second device to perform operations comprising: receiving a demodulation reference signal (DMRS) on a narrow physical uplink shared channel (NPUSCH). For example, the DMRS may be based on a second DMRS sequence. For example, the second DMRS sequence may be obtained based on applying the second OCC that is repeated based on a length of the second OCC to a first DMRS sequence. For example, the first DMRS sequence may be obtained based on applying the first OCC that is repeated based on a length of the first OCC to a random sequence.

Based on an embodiment, a processing device adapted to control a second device may be provided. The processing device may include: at least one processor; and at least one memory connected to the at least one processor and storing instructions, and the instructions, based on being executed by the at least one processor, may cause the second device to perform operations comprising: receiving a demodulation reference signal (DMRS) on a narrow physical uplink shared channel (NPUSCH). For example, the DMRS may be based on a second DMRS sequence. For example, the second DMRS sequence may be obtained based on applying the second OCC that is repeated based on a length of the second OCC to a first DMRS sequence. For example, the first DMRS sequence may be obtained based on applying the first OCC that is repeated based on a length of the first OCC to a random sequence.

Based on an embodiment, a non-transitory computer-readable storage medium storing instructions may be provided. The instructions, based on being executed, may cause a second device to perform operations comprising: receiving a demodulation reference signal (DMRS) on a narrow physical uplink shared channel (NPUSCH). For example, the DMRS may be based on a second DMRS sequence. For example, the second DMRS sequence may be obtained based on applying the second OCC that is repeated based on a length of the second OCC to a first DMRS sequence. For example, the first DMRS sequence may be obtained based on applying the first OCC that is repeated based on a length of the first OCC to a random sequence.

### ADVANTAGEOUS EFFECTS

The present disclosure may provide a method and device capable of effectively providing services in a wireless communication system. For example, through embodiments proposed by the present disclosure, communication may be efficiently performed.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows an uplink resource grid for NB-IoT, based on an embodiment of the present disclosure.
FIG. 10 shows a random access symbol group, based on an embodiment of the present disclosure.
FIG. 11 shows a procedure related to a DMRS, based on an embodiment of the present disclosure.
FIG. 12 shows a method for a first device to perform wireless communication, based on an embodiment of the present disclosure.
FIG. 13 shows a method for a second device to perform wireless communication, based on an embodiment of the present disclosure.
FIG. 14 shows a communication system 1, based on an embodiment of the present disclosure.
FIG. 15 shows wireless devices, based on an embodiment of the present disclosure.
FIG. 16 shows a signal process circuit for a transmission signal, based on an embodiment of the present disclosure.
FIG. 17 shows another example of a wireless device, based on an embodiment of the present disclosure.
FIG. 18 shows a hand-held device, based on an embodiment of the present disclosure.
FIG. 19 shows a vehicle or an autonomous vehicle, based on an embodiment of the present disclosure.

### MODE FOR INVENTION

In the present disclosure, "A or B" may mean "only A", "only B" or "both A and B". For example, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". For example, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on, based on that'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or preconfigured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

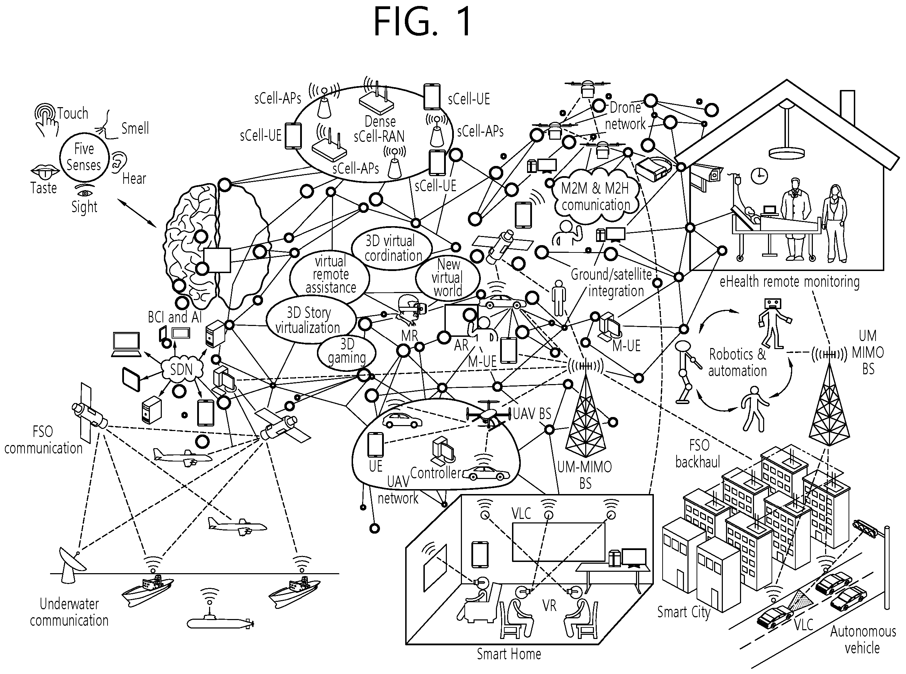

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

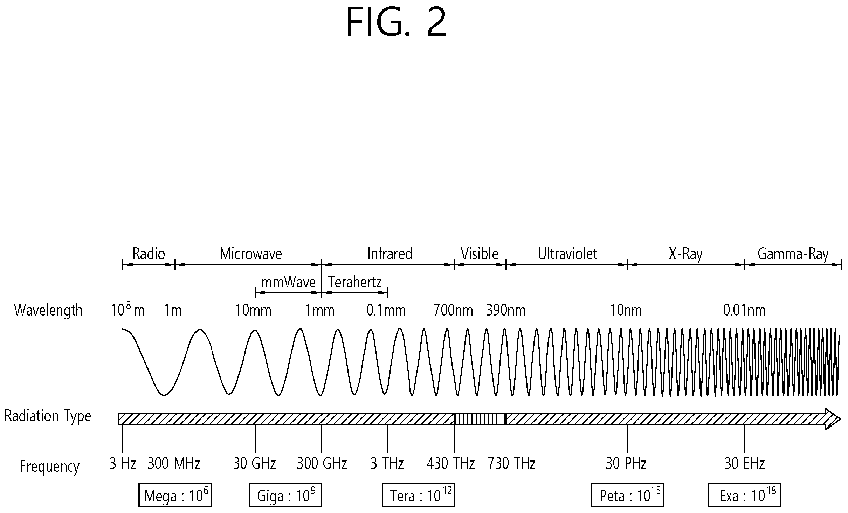

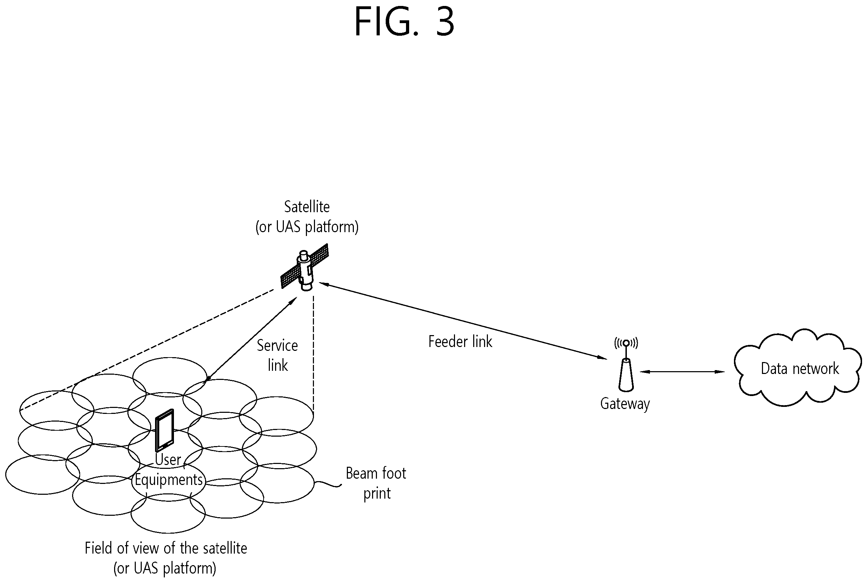

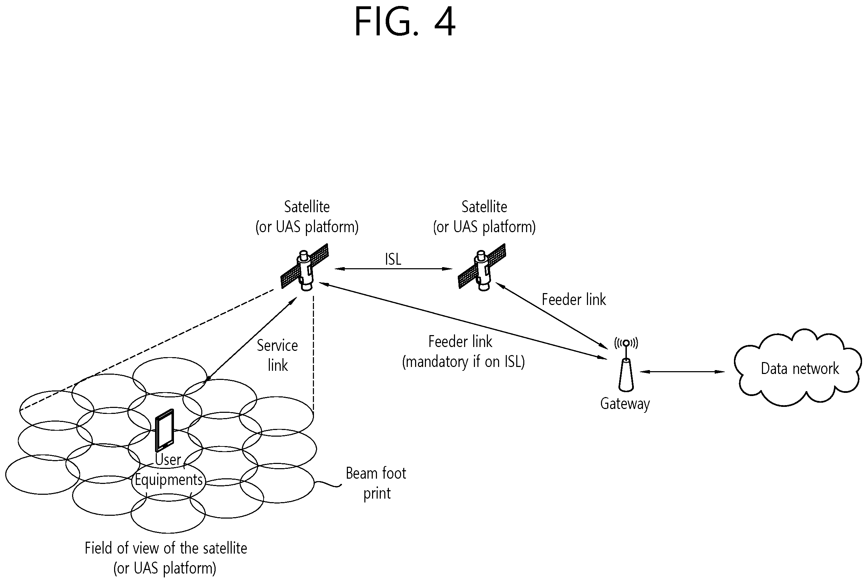

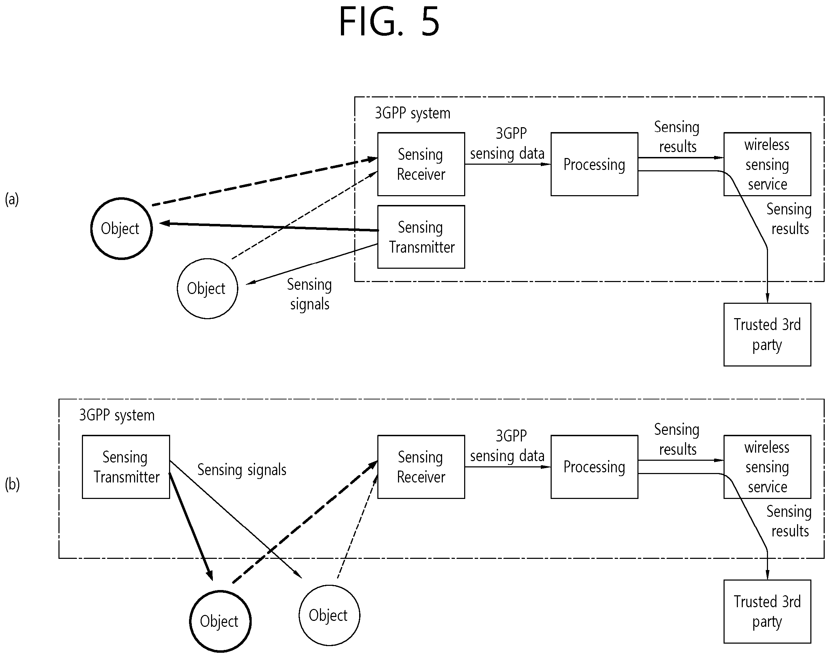

Core implementation technology of 6G system is described below.
- Artificial Intelligence (AI): When AI is introduced to communication, real-time data transmission may be simplified and improved. AI may determine a method of performing complicated target tasks using countless analysis. For example, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

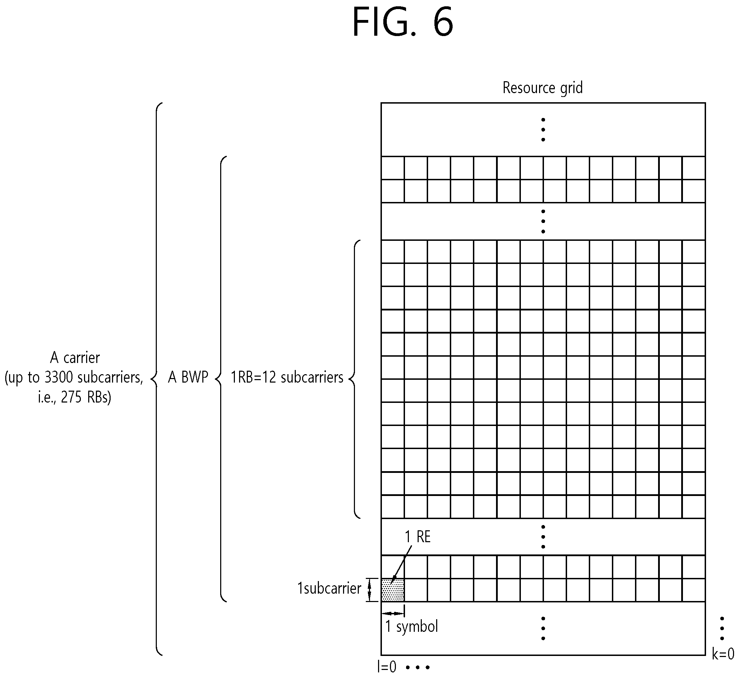

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

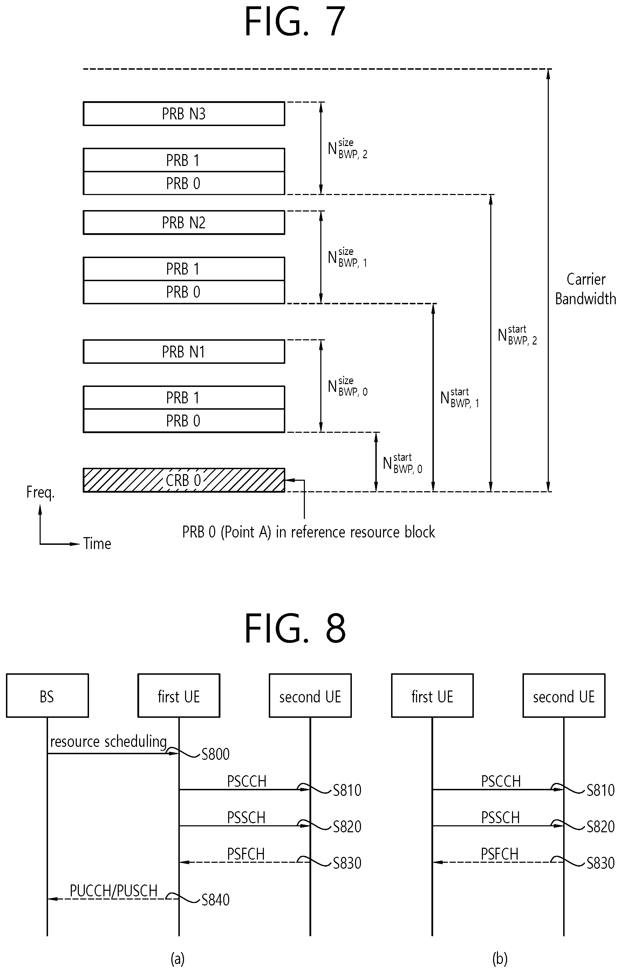

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, an inter-device physical control channel, or the like. In the present disclosure, a PSSCH may be replaced with a shared channel, a physical shared channel, a shared channel related to sidelink, a physical shared channel related to sidelink, an inter-device physical shared channel, or the like. For example, SL communication may be replaced with inter-device communication. For example, in a term referring to various channels and/or signals related to SL communication, the SL portion may be replaced with "inter-device".

In the present disclosure, a PUCCH may be replaced with a control channel, a physical control channel, a control channel related to uplink, a physical control channel related to uplink, a device-to-base station physical control channel, a UE-to-base station physical control channel, or the like. In the present disclosure, a PUSCH may be replaced with a shared channel, a physical shared channel, a shared channel related to uplink, a physical shared channel related to uplink, a device-to-base station physical shared channel, a UE-to-base station physical shared channel, or the like. For example, UL communication may be replaced with UE-to-base station communication or device-to-base station communication. For example, in a term referring to various channels and/or signals related to UL communication, the UL portion may be replaced with "device-to-base station" or "UE-to-base station".

In the present disclosure, a PDCCH may be replaced with a control channel, a physical control channel, a control channel related to downlink, a physical control channel related to downlink, a base station-to-device physical control channel, a base station-to-UE physical control channel, or the like. In the present disclosure, a PDSCH may be replaced with a shared channel, a physical shared channel, a shared channel related to downlink, a physical shared channel related to downlink, a base station-to-device physical shared channel, a base station-to-UE physical shared channel, or the like. For example, DL communication may be replaced with base station-to-device communication or base station-to-UE communication. For example, in a term referring to various channels and/or signals related to DL communication, the DL portion may be replaced with "base station-to-device" or "base station-to-UE".

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resources to be used by a UE for SL transmission. For example, in step S800, the base station may transmit, to a first UE, information related to SL resources and/or information related to sensing resources (e.g., UL resources or SL resources). For example, the sensing resources (e.g., UL resources or SL resources) may include PUCCH resources and/or PUSCH resources. For example, the sensing resources (e.g., UL resources or SL resources) may be resources for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{s}-stage SCI) to a second UE based on the resource scheduling. In step S820, the first UE may transmit a PSSCH (e.g., 2n-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

For example, SCI carried on PSCCH may be a 1^{st}-stage SCI, which may transport sidelink scheduling information. For example, SCI format 1-A may be used for the scheduling of PSSCH and 2^{nd}-stage-SCI on PSSCH. For example, SCI carried on PSSCH may be a 2^{nd}-stage SCI, which may transport sidelink scheduling information.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

### 1.1 Uplink

### 1.1.1 Overview

### 1.1.1.1 Physical channels

For example, the following narrowband physical channels may be defined:
- Narrowband Physical Uplink Shared Channel, NPUSCH
- Narrowband Physical Random-Access Channel, NPRACH

### 1.1.1.2 Physical signals

For example, the following uplink narrowband physical signals may be defined:
- Narrowband demodulation reference signal

### 1.1.2 Slot structure and physical resources

### 1.1.2.1 Resource grid

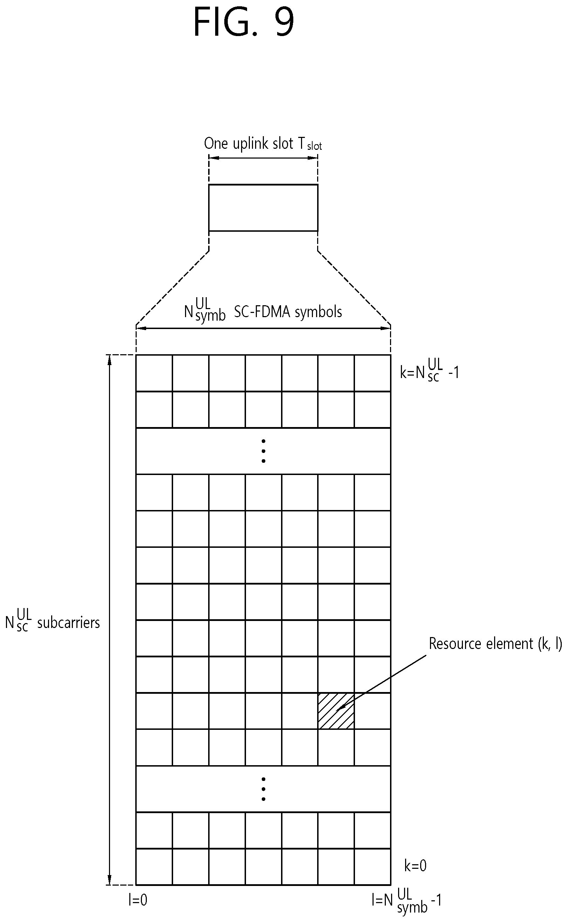

For example, a transmitted physical channel or signal in a slot may be described by one or several resource grids of ${N}_{sc}^{UL}$ subcarriers and ${N}_{symb}^{UL}$ SC-FDMA symbols. For example, the resource grid may be illustrated in FIG. 9. For example, the slot number within a radio frame may be denoted *nₛ* where *nₛ* ∈ {0,1,...,19} for *Δf* = 15 kHz and *nₛ* ∈ {0,1,...,4} for *Δf =* 3.75 kHz.

FIG. 9 shows an uplink resource grid for NB-IoT, based on an embodiment of the present disclosure. The embodiment of FIG. 9 may be combined with various embodiments of the present disclosure.

For example, the uplink bandwidth in terms of subcarriers ${N}_{sc}^{UL}$, and the slot duration *T*ₛₗₒₜ may be given in Table 3.

Table 3: NB-IoT parameters.

**[Table 3]**

| Subcarrier spacing | ${N}_{sc}^{UL}$ | *T*ₛₗₒₜ |
|---|---|---|
| *Δf* = 3.75 kHz | 48 | 61440 · Tₛ |
| *Δf* = 15 kHz | 12 | 15360 · Tₛ |

For example, a single antenna port *p* = 0 may be used for all uplink transmissions.

### 1.1.2.2 Resource elements

For example, each element in the resource grid may be called a resource element and may be uniquely defined by the index pair (*k*, *l*) in a slot where $k = 0 , … , {N}_{sc}^{UL} - 1$ and $l = 0 , … , {N}_{symb}^{UL} - 1$ may be the indices in the frequency and time domains, respectively. For example, resource element (*k, l*) may correspond to the complex value *a_{k,l}.* For example, quantities *a_{k,l}* corresponding to resource elements not used for transmission of a physical channel or a physical signal in a slot may be set to zero.

### 1.1.2.3 Resource unit

For example, resource units may be used to describe the mapping of the NPUSCH to resource elements. For example, a resource unit may be defined as ${N}_{symb}^{UL} {N}_{slots}^{UL}$ SC-FDMA symbols in the time domain and ${N}_{sc}^{RU}$consecutive subcarriers in the frequency domain, where ${N}_{sc}^{RU}$ and ${N}_{symb}^{UL}$ may be given by Tables 4 and 5 for frame structure types 1 and 2, respectively.

Table 4: Supported combinations of ${N}_{sc}^{RU} , {N}_{slots}^{UL}$*,* and ${N}_{symb}^{UL}$ for frame structure type 1.

**[Table 4]**

| NPUSCH format | *Δf* | ${N}_{sc}^{RU}$ | ${N}_{slots}^{UL}$ | ${N}_{symb}^{UL}$ |
|---|---|---|---|---|
| 1 | 3.75 kHz | 1 | 16 | |
| | 15 kHz | 1 | 16 | |
| | | 3 | 8 | |
| | | 6 | 4 | 7 |
| | | 12 | 2 | |
| 2 | 3.75 kHz | 1 | 4 | |
| | 15 kHz | 1 | 4 | |

Table 5: Supported combinations of ${N}_{sc}^{RU} , {N}_{slots}^{UL}$, and ${N}_{symb}^{UL}$ for frame structure type 2.

**[Table 5]**

| NPUSCH format | *Δf* | Supported uplink-downlink configurations | ${N}_{sc}^{RU}$ | ${N}_{slots}^{UL}$ | ${N}_{symb}^{UL}$ |
|---|---|---|---|---|---|
| 1 | 3.75 kHz | 1, 4 | 1 | 16 | |
| | 15 kHz | 1, 2, 3, 4, 5 | 1 | 16 | |
| | | | 3 | 8 | |
| | | | 6 | 4 | 7 |
| | | | 12 | 2 | |
| 2 | 3.75 kHz | 1, 4 | 1 | 4 | |
| | 15 kHz | 1,2,3,4,5 | 1 | 4 | |

### 1.1.3 Narrowband physical uplink shared channel

For example, the narrowband physical uplink shared channel may support two formats:
- NPUSCH format 1, may be used to carry the UL-SCH
- NPUSCH format 2, may be used to carry uplink control information

### 1.1.3.1 Scrambling

For example, scrambling may be done according to clause 5.3.1 of 3GPP TS 36.211. For example, the scrambling sequence generator may be initialised with ${c}_{init} = {n}_{RNTI} ⋅ {2}^{14} + {n}_{f} mod 2 ⋅ {2}^{13} + \left⌊{n}_{s}/2\right⌋ ⋅ {2}^{9} + {N}_{ID}^{Ncell}$ where *nₛ* may be the first slot of the transmission of the codeword. For example, in case of NPUSCH repetitions, the scrambling sequence may be reinitialised according to the above formula after every ${M}_{identical}^{NPUSCH}$ transmissions of the codeword with *nₛ* and *n_{f}* set to the first slot and the frame, respectively, used for the transmission of the repetition. For example, the quantity ${M}_{identical}^{NPUSCH}$ may be given by clause 1.1.3.6.

### 1.1.3.2 Modulation

For example, modulation may be done according to clause 5.3.2 of 3GPP TS 36.211 resulting in a block of modulated symbols ${d}^{\left(q\right)} \left(0\right) , … , {d}^{\left(q\right)} \left({M}_{symb}^{\left(q\right)}-1\right)$. For example, table 6 may specify the modulation mappings applicable for the narrowband physical uplink shared channel.

For example, the block of modulated symbols may be multiplied with a code *c*_{SR} resulting in a block of modulation symbols ${\overline{d}}^{\left(q\right)} \left(0\right) , … , {\overline{d}}^{\left(q\right)} \left({M}_{symb}^{\left(q\right)}-1\right)$ according to
${\overline{d}}^{\left(q\right)} \left(i\right) = {c}_{SR} \left(i\right) {d}^{\left(q\right)} \left(i\right)$
where
- *c*_{SR}(*i*) = (-1)*ⁱ*, *i* = 0, 1, ..., 15 in case a positive scheduling request according to [4] may be to be transmitted using NPUSCH format 2
- *c*_{SR}(*i*) = 1 otherwise

**Table 6: NPUSCH modulation schemes**

| [Table 6] | | |
|---|---|---|
| NPUSCH format | ${N}_{sc}^{RU}$ | Modulation scheme |
| 1 | 1 | BPSK, QPSK |
| | >1 | QPSK, 16QAM |
| 2 | 1 | BPSK |

### 1.1.3.3 Layer mapping

For example, layer mapping may be done according to clause 5.3.2A of 3GPP TS 36.211 with v = 1 using ${\overline{d}}^{\left(q\right)} \left(0\right) , … , {\overline{d}}^{\left(q\right)} \left({M}_{symb}^{\left(q\right)}-1\right)$ instead of ${d}^{\left(q\right)} \left(0\right) , … , {d}^{\left(q\right)} \left({M}_{symb}^{\left(q\right)}-1\right)$.

### 1.1.3.4 Transform precoding

For example, transform precoding may be done according to clause 5.3.3 of 3GPP TS 36.211 with ${M}_{RB}^{PUSCH} = 1$ and ${M}_{sc}^{PUSCH}$ may be replaced by ${M}_{sc}^{NPUSCH}$.

### 1.1.3.5 Precoding

For example, precoding may be done according to clause 5.3.3A of 3GPP TS 36.211 assuming a single antenna port.

### 1.1.3.6 Mapping to physical resources

For example, each NPUSCH codeword may be mapped to one or more than one resource units, *N*_{RU}, as given by clause 2.5.1.2 [4], each of which may be transmitted ${M}_{rep}^{NPUSCH}$ times.

For example, the block of complex-valued symbols $z \left(0\right) , … , z \left({M}_{symb}^{ap}-1\right)$ may be multiplied with the amplitude scaling factor *β*_{NPUSCH} in order to conform to the transmit power *P*_{NPUSCH} specified in [4], and mapped in sequence starting with *z(0)* to subcarriers assigned for transmission of NPUSCH. For example, the mapping to resource elements (*k, l*) corresponding to the subcarriers assigned for transmission and not used for transmission of reference signals, may be in increasing order of first the index *k*, then the index*l*, starting with the first slot in the assigned resource unit.

For example, after mapping to *N*ₛₗₒₜₛ slots, the *N*ₛₗₒₜₛ slots may be repeated ${M}_{identical}^{NPUSCH} - 1$ additional times, before continuing the mapping of z(·)to the following slot, where
${M}_{identical}^{NPUSCH} = \left\{\begin{matrix}min \left(\left⌈{M}_{rep}^{NPUSCH}/2\right⌉, 4\right) & {N}_{sc}^{RU} > 1 \\ 1 & {N}_{sc}^{RU} = 1\end{matrix}\right.$${N}_{slots} = \left\{\begin{matrix}1 & Δf = 3.75 kHz \\ 2 & Δf = 15 kHz\end{matrix}\right.$

For example, for NPUSCH Format 1 and 2 on frame structure type 2 with *Δf* = 3.75 kHz,
- the NPUSCH transmission may be carried out in the first set of *N*ₛₗₒₜₛ slots spanning over two contiguous uplink subframes not overlapping with any uplink subframe configured as invalid;
- for TDD configuration 1 and 4, if the starting position for the NPUSCH is indicated as the second of the two contiguous uplink subframes, the NPUSCH transmission may be postponed until the start of two consecutive uplink subframes.

For example, if a mapping to *N*ₛₗₒₜₛ slots or a repetition of the mapping contains a resource element which overlaps with
- any configured NPRACH resource according to *nprach-ParametersList* in *SystemInformationBlockType2-NB,* or
- any configured NPRACH resource according to *nprach-ParametersList* given by *ul-ConfigList* in *SystemInformationBlockType22-NB* and if the UE indicates multiCarrier-NPRACH as supported, or
- any configured NPRACH resource according to *nprach-ParametersList* given by *ul-ConfigListMixed* in *SystemInformationBlockType22-NB* and if the UE indicates *multiCarrier-NPRACH* and *mixedOperationMode* as supported, or
- any configured NPRACH resource according to *nprach-ParametersListFmt2* in *SystemInformationBlockType2-NB* and if the UE indicates *nprach-Format2* as supported, or
- any configured NPRACH resource according to *nprach-ParametersListFmt2* given by *ul-ConfigList* in *SystemInformationBlockType23-NB* and if the UE indicates *multiCarrier-NPRACH* and *nprach-Format2* as supported, or
- any configured NPRACH resource according to *nprach-ParametersListFmt2* given by *ul-ConfigListMixed* in *SystemInformationBlockType23-NB* and if the UE indicates *multiCarrier-NPRACH, mixedOperationMode* and *nprach-Format2* as supported, or
- any configured NPRACH resource according to *nprach-ParametersListTDD* in *SystemInformationBlockType2-NB,* or
- any configured NPRACH resource according to *nprach-ParametersListTDD* in *SystemInformationBlockType22-NB* and if the UE indicates *multiCarrier-NPRACH* as supported, or
- any configured NPRACH resource configured for Early Data Transmission and if the NPUSCH transmission is during an Early Data Transmission procedure [12, Clause 7.3b of 3GPP TS 36.211],

For example, then,
- for *Δf* = 3.75 kHz the NPUSCH transmission in overlapped *N*ₛₗₒₜₛ slots may be postponed until the next *N*ₛₗₒₜₛ slots not overlapping with any configured NPRACH resource.
- for *Δf* = 15 kHz the NPUSCH transmission in overlapped *N*ₛₗₒₜₛ slots may be postponed until the next *N*ₛₗₒₜₛ slots starting with the first slot satisfying *nₛ* mod 2 = 0 and not overlapping with any configured NPRACH resource.

For example, NPRACH gaps as defined in clause 1.1.6.1 may not be part of the NPRACH resource. For example, for frame structure type 2, the valid uplink subframes which are not used for NPRACH transmission when it is not possible to map G symbol groups back-to-back may not be part of the NPRACH resource. For example, the mapping of $z \left(0\right) , … , z \left({M}_{symb}^{ap}-1\right)$ may then be repeated until ${M}_{rep}^{NPUSCH} {N}_{RU} {N}_{slots}^{UL}$ slots have been transmitted. For example, after transmissions and/or postponements due to NPRACH of 256 · 30720*Tₛ* time units, for frame structure type 1, a gap of 40 · 30720*Tₛ* time units may be inserted where the NPUSCH transmission is postponed. For example, the portion of a postponement due to NPRACH which coincides with a gap may be counted as part of the gap.

For example, when higher layer parameter *npusch-AllSymbols* is set to false, resource elements in SC-FDMA symbols overlapping with a symbol configured with SRS according to *srs-SubframeConfig* may be counted in the NPUSCH mapping but may not be used for transmission of the NPUSCH. For example, when higher layer parameter *npusch-AllSymbols* is set to true, all symbols may be transmitted.

For example, if higher layer parameter *resourceReservationConfigUL* is configured, then in case of NPUSCH format 1 transmission associated with C-RNTI or SPS C-RNTI using UE-specific NPDCCH search space with the Resource reservation field in the DCI set to 1 including NPUSCH format 1 transmission without a corresponding NPDCCH, or in case of NPUSCH format 2 transmission associated with C-RNTI using UE-specific NPDCCH search space,
- In a subframe for *Δf* = 15 kHz or a slot for *Δf* = 3.75 kHz that is overlapping with any fully reserved uplink subframe as defined in clause 2.5 in [4],
   - - for *Δf* = 15 kHz, the NPUSCH transmission is postponed until the next NB-IoT uplink subframe that is not fully reserved.
   - - for *Δf* = 3.75 kHz, the NPUSCH transmission in the slot is postponed until the next slot spanning over two contiguous uplink subframes not overlapping with any uplink subframe that is fully reserved.
- In a subframe for *Δf* = 15 kHz or a slot for *Δf* = 3.75 kHzthat is not overlapping with any fully reserved uplink subframe, any SC-FDMA symbols overlapping with reserved symbols shall be counted in the NPUSCH mapping but not used for transmission of the NPUSCH.

For example, for a UE communicating over NTN, after transmissions (and/or postponements due to NPRACH) of ${N}_{segment}^{precompensation}$ time units, for frame structure type 1, a transmission gap of ${N}_{gap}^{precompensation}$ time units shall be counted for the NPUSCH resource mapping but not used for transmission of the NPUSCH according to the UE capability *ntn-SegmentedPrecompensationGaps-r1*7 as specified in 3GPP TS 36.331 [9]. For example, the quantity ${N}_{segment}^{precompensation}$ is provided by higher layers, and the quantity of ${N}_{gap}^{precompensation}$ is configured by higher layers based on the UE capability if signalled.

1.1.4 Demodulation reference signal

1.1.4.1 Reference signal sequence

1.1.4.1.1 Reference signal sequence for ${N}_{sc}^{RU} = 1$

For example, the reference signal sequence *r̅ᵤ*(*n*) for ${N}_{sc}^{RU} = 1$ may be defined by
${\overline{r}}_{u} \left(n\right) = \frac{1}{\sqrt{2}} \left(1+j\right) \left(1-2c\left(n\right)\right) w \left(n mod 16\right) , 0 \leq n < {M}_{rep}^{NPUSCH} {N}_{slots}^{UL} {N}_{RU}$

For example, where the binary sequence *c(n)* may be defined by clause 7.2 of 3GPP TS 36.211 and may be initialised with *c*ᵢₙᵢₜ = 35 at the start of the NPUSCH transmission. For example, the quantity *w*(*n*) may be given by Table 7 where $u = {N}_{ID}^{Ncell} mod 16$ for NPUSCH format 2, and for NPUSCH format 1 if group hopping is not enabled, and by clause 1.1.4.1.3 if group hopping is enabled for NPUSCH format 1.

**Table 7: Definition ofw(n)**

| [Table 7] | | | | | | | | | | | | | | | | |
|---|---|---|---|---|---|---|---|---|---|---|---|---|---|---|---|---|
| u | *w*(0),...,*w*(15) | | | | | | | | | | | | | | | |
| 0 | 1 | 1 | 1 | 1 | 1 | 1 | 1 | 1 | 1 | 1 | 1 | 1 | 1 | 1 | 1 | 1 |
| 1 | 1 | -1 | 1 | -1 | 1 | -1 | 1 | -1 | 1 | -1 | 1 | -1 | 1 | -1 | 1 | -1 |
| 2 | 1 | 1 | -1 | -1 | 1 | 1 | -1 | -1 | 1 | 1 | -1 | -1 | 1 | 1 | -1 | -1 |
| 3 | 1 | -1 | -1 | 1 | 1 | -1 | -1 | 1 | 1 | -1 | -1 | 1 | 1 | -1 | -1 | 1 |
| 4 | 1 | 1 | 1 | 1 | -1 | -1 | -1 | -1 | 1 | 1 | 1 | 1 | -1 | -1 | -1 | -1 |
| 5 | 1 | -1 | 1 | -1 | -1 | 1 | -1 | 1 | 1 | -1 | 1 | -1 | -1 | 1 | -1 | 1 |
| 6 | 1 | 1 | -1 | -1 | -1 | -1 | 1 | 1 | 1 | 1 | -1 | -1 | -1 | -1 | 1 | 1 |
| 7 | 1 | -1 | -1 | 1 | -1 | 1 | 1 | -1 | 1 | -1 | -1 | 1 | -1 | 1 | 1 | -1 |
| 8 | 1 | 1 | 1 | 1 | 1 | 1 | 1 | 1 | -1 | -1 | -1 | -1 | -1 | -1 | -1 | -1 |
| 9 | 1 | -1 | 1 | -1 | 1 | -1 | 1 | -1 | -1 | 1 | -1 | 1 | -1 | 1 | -1 | 1 |
| 10 | 1 | 1 | -1 | -1 | 1 | 1 | -1 | -1 | -1 | -1 | 1 | 1 | -1 | -1 | 1 | 1 |
| 11 | 1 | -1 | -1 | 1 | 1 | -1 | -1 | 1 | -1 | 1 | 1 | -1 | -1 | 1 | 1 | -1 |
| 12 | 1 | 1 | 1 | 1 | -1 | -1 | -1 | -1 | -1 | -1 | -1 | -1 | 1 | 1 | 1 | 1 |
| 13 | 1 | -1 | 1 | -1 | -1 | 1 | -1 | 1 | -1 | 1 | -1 | 1 | 1 | -1 | 1 | -1 |
| 14 | 1 | 1 | -1 | -1 | -1 | -1 | 1 | 1 | -1 | -1 | 1 | 1 | 1 | 1 | -1 | -1 |
| 15 | 1 | -1 | -1 | 1 | -1 | 1 | 1 | -1 | -1 | 1 | 1 | -1 | 1 | -1 | -1 | 1 |

For example, the reference signal sequence for NPUSCH format 1 may be given by:
${r}_{u} \left(n\right) = {\overline{r}}_{u} \left(n\right)$

For example, the reference signal sequence for NPUSCH format 2 may be given by
${r}_{u} \left(3n+m\right) = \overline{w} \left(m\right) {\overline{r}}_{u} \left(n\right) , m = 0 , 1 , 2$

For example, where *w̅*(*m*) may be defined in Table 8 with the sequence index chosen according to $\left({\sum }_{i = 0}^{7} c \left(8n′+i\right) ⋅ {2}^{i}\right) mod 3$ with ${c}_{init} = {N}_{ID}^{Ncell}$. For example, for frame structure type 1, *n*' = *nₛ*. For example, for frame structure type 2, *n'* = (*nₛ* + *n_{f}*)*mod* 5 for *Δf* = 3.75 kHz and *n'* = (*nₛ* + *n_{f}*)*mod* 20 for *Δf =* 15 kHz.

Orthogonal sequences $\left[{\overline{w}}^{\left({p}^{˜}\right)}\left(0\right) ⋯ {\overline{w}}^{\left({p}^{˜}\right)}\left({N}_{RS}^{PUCCH}-1\right)\right]$ for PUCCH formats 1, 1a and 1b

**[Table 8]**

| Sequence index ${\overline{n}}_{oc}^{\left({p}^{˜}\right)} \left({n}_{S}\right)$ | Normal cyclic prefix | Extended cyclic prefix |
|---|---|---|
| 0 | [1 1 1] | [1 1] |
| 1 | [1 *e*^{*j2π*/}*³ e*^{*j*4*π*/3}] | [1 -1] |
| 2 | [1 *e*^{*j*4*π*/3} *e*^{*j*2*π*/3}] | N/A |

1.1.4.1.2 Reference signal sequence for ${N}_{sc}^{RU} > 1$

For example, the reference signal sequences *rᵤ*(*n*) for ${N}_{sc}^{RU} > 1$ may be defined by a cyclic shift *α* of a base sequence according to
${r}_{u} \left(n\right) = {e}^{jαn} {e}^{j \frac{ϕ \left(n\right) π}{4}} , 0 \leq n < {N}_{sc}^{RU} ,$

For example, where *φ*(*n*) may be given by Table 9 for ${N}_{sc}^{RU} = 3$, Table 10 for ${N}_{sc}^{RU} = 6$ and Table 11 for ${N}_{sc}^{RU} = 12$.

Table 9: Definition of *φ*(*n*) for ${N}_{sc}^{RU} = 3$

**[Table 9]**

| u | *ϕ*(0), *ϕ*(1), *ϕ*(2) | | |
|---|---|---|---|
| 0 | 1 | -3 | -3 |
| 1 | 1 | -3 | -1 |
| 2 | 1 | -3 | 3 |
| 3 | 1 | -1 | -1 |
| 4 | 1 | -1 | 1 |
| 5 | 1 | -1 | 3 |
| 6 | 1 | 1 | -3 |
| 7 | 1 | 1 | -1 |
| 8 | 1 | 1 | 3 |
| 9 | 1 | 3 | -1 |
| 10 | 1 | 3 | 1 |
| 11 | 1 | 3 | 3 |

Table 10: Definition of *φ*(*n*) for ${N}_{sc}^{RU} = 6$

**[Table 10]**

| u | *ϕ*(0), ... , *ϕ*(5) | | | | | |
|---|---|---|---|---|---|---|
| 0 | 1 | 1 | 1 | 1 | 3 | -3 |
| 1 | 1 | 1 | 3 | 1 | -3 | 3 |
| 2 | 1 | -1 | -1 | -1 | 1 | -3 |
| 3 | 1 | -1 | 3 | -3 | -1 | -1 |
| 4 | 1 | 3 | 1 | -1 | -1 | 3 |
| 5 | 1 | -3 | -3 | 1 | 3 | 1 |
| 6 | -1 | -1 | 1 | -3 | -3 | -1 |
| 7 | -1 | -1 | -1 | 3 | -3 | -1 |
| 8 | 3 | -1 | 1 | -3 | -3 | 3 |
| 9 | 3 | -1 | 3 | -3 | -1 | 1 |
| 10 | 3 | -3 | 3 | -1 | 3 | 3 |
| 11 | -3 | 1 | 3 | 1 | -3 | -1 |
| 12 | -3 | 1 | -3 | 3 | -3 | -1 |
| 13 | -3 | 3 | -3 | 1 | 1 | -3 |

Table 11: Definition of *φ*(*n*) for ${M}_{sc}^{RS} = {N}_{sc}^{RB}$

**[Table 11]**

| *u* | *ϕ*(0),...,*ϕ*(11) | | | | | | | | | | | |
|---|---|---|---|---|---|---|---|---|---|---|---|---|
| 0 | -1 | 1 | 3 | -3 | 3 | 3 | 1 | 1 | 3 | 1 | -3 | 3 |
| 1 | 1 | 1 | 3 | 3 | 3 | -1 | 1 | -3 | -3 | 1 | -3 | 3 |
| 2 | 1 | 1 | -3 | -3 | -3 | -1 | -3 | -3 | 1 | -3 | 1 | -1 |
| 3 | -1 | 1 | 1 | 1 | 1 | -1 | -3 | -3 | 1 | -3 | 3 | -1 |
| 4 | -1 | 3 | 1 | -1 | 1 | -1 | -3 | -1 | 1 | -1 | 1 | 3 |
| 5 | 1 | -3 | 3 | -1 | -1 | 1 | 1 | -1 | -1 | 3 | -3 | 1 |
| 6 | -1 | 3 | -3 | -3 | -3 | 3 | 1 | -1 | 3 | 3 | -3 | 1 |
| 7 | -3 | -1 | -1 | -1 | 1 | -3 | 3 | -1 | 1 | -3 | 3 | 1 |
| 8 | 1 | -3 | 3 | 1 | -1 | -1 | -1 | 1 | 1 | 3 | -1 | 1 |
| 9 | 1 | -3 | -1 | 3 | 3 | -1 | -3 | 1 | 1 | 1 | 1 | 1 |
| 10 | -1 | 3 | -1 | 1 | 1 | -3 | -3 | -1 | -3 | -3 | 3 | -1 |
| 11 | 3 | 1 | -1 | -1 | 3 | 3 | -3 | 1 | 3 | 1 | 3 | 3 |
| 12 | 1 | -3 | 1 | 1 | -3 | 1 | 1 | 1 | -3 | -3 | -3 | 1 |
| 13 | 3 | 3 | -3 | 3 | -3 | 1 | 1 | 3 | -1 | -3 | 3 | 3 |
| 14 | -3 | 1 | -1 | -3 | -1 | 3 | 1 | 3 | 3 | 3 | -1 | 1 |
| 15 | 3 | -1 | 1 | -3 | -1 | -1 | 1 | 1 | 3 | 1 | -1 | -3 |
| 16 | 1 | 3 | 1 | -1 | 1 | 3 | 3 | 3 | -1 | -1 | 3 | -1 |
| 17 | -3 | 1 | 1 | 3 | -3 | 3 | -3 | -3 | 3 | 1 | 3 | -1 |
| 18 | -3 | 3 | 1 | 1 | -3 | 1 | -3 | -3 | -1 | -1 | 1 | -3 |
| 19 | -1 | 3 | 1 | 3 | 1 | -1 | -1 | 3 | -3 | -1 | -3 | -1 |
| 20 | -1 | -3 | 1 | 1 | 1 | 1 | 3 | 1 | -1 | 1 | -3 | -1 |
| 21 | -1 | 3 | -1 | 1 | -3 | -3 | -3 | -3 | -3 | 1 | -1 | -3 |
| 22 | 1 | 1 | -3 | -3 | -3 | -3 | -1 | 3 | -3 | 1 | -3 | 3 |
| 23 | 1 | 1 | -1 | -3 | -1 | -3 | 1 | -1 | 1 | 3 | -1 | 1 |
| 24 | 1 | 1 | 3 | 1 | 3 | 3 | -1 | 1 | -1 | -3 | -3 | 1 |
| 25 | 1 | -3 | 3 | 3 | 1 | 3 | 3 | 1 | -3 | -1 | -1 | 3 |
| 26 | 1 | 3 | -3 | -3 | 3 | -3 | 1 | -1 | -1 | 3 | -1 | -3 |
| 27 | -3 | -1 | -3 | -1 | -3 | 3 | 1 | -1 | 1 | 3 | -3 | -3 |
| 28 | -1 | 3 | -3 | 3 | -1 | 3 | 3 | -3 | 3 | 3 | -1 | -1 |
| 29 | 3 | -3 | -3 | -1 | -1 | -3 | -1 | 3 | -3 | 3 | 1 | -1 |

For example, if group hopping is not enabled, the base sequence index *u* may be given by higher layer parameters *threeTone-BaseSequence, sixTone-BaseSequence,* and *twelveTone-BaseSequence* for ${N}_{sc}^{RU} = 3 , {N}_{sc}^{RU} = 6$, and ${N}_{sc}^{RU} = 12$, respectively. For example, if not signalled by higher layers, the base sequence may be given by
$u = \left\{\begin{matrix}{N}_{ID}^{Ncell} mod 1 2 & for {N}_{sc}^{RU} = 3 \\ {N}_{ID}^{Ncell} mod 1 4 & for {N}_{sc}^{RU} = 6 \\ {N}_{ID}^{Ncell} mod 3 0 & for {N}_{sc}^{RU} = 12\end{matrix}\right.$

For example, if group hopping is enabled, the base sequence index u may be given by clause 1.1.4.1.3.

For example, the cyclic shift *α* for ${N}_{sc}^{RU} = 3$ and ${N}_{sc}^{RU} = 6$ may be derived from higher layer parameters *threeTone-CyclicShift* and *sixTone-CyclicShift,* respectively, as defined in Table 12. For example, for ${N}_{sc}^{RU} = 12$, if *npusch-CyclicShift* in *PUR-Config-NB* is configured for NPUSCH (re)transmission corresponding to preconfigured uplink resource it may provide the value of *n_{CS}* and the cyclic shift *α* in a slot *nₛ* may be given as *α* = 2*πn_{cs}*/12, otherwise α = 0.

Table 12: Definition of *φ*(*n*) for ${N}_{sc}^{RU} = 3$

**[Table 12]**

| ${N}_{sc}^{RU} = 3$ | | ${N}_{sc}^{RU} = 6$ | |
|---|---|---|---|
| *threeTone-CyclicShift* | *α* | *sixTone-CyclicShift* | *α* |
| 0 | 0 | 0 | 0 |
| 1 | 2*π*/3 | 1 | 2*π*/6 |
| 2 | 4*π*/3 | 2 | 4*π*/6 |
| | | 3 | 8*π*/6 |

### 1.1.4.1.3 Group hopping

For example, for the reference signal for NPUSCH format 1, sequence-group hopping may be enabled where the sequence-group number *u* in slot *nₛ* of a radio frame *n*_{f} may be defined by a group hopping pattern *f*_{gh}(*n*') and a sequence-shift pattern *f*ₛₛ according to
$u = \left({f}_{gh}\left(n′\right)+{f}_{ss}\right) mod {N}_{seq}^{RU}$

For example, where the number of reference signal sequences available for each resource unit size, ${N}_{seq}^{RU}$ may be given by Table 13.

Table 13: Definition of ${N}_{seq}^{RU}$

**[Table 13]**

| ${N}_{sc}^{RU}$ | ${N}_{seq}^{RU}$ |
|---|---|
| 1 | 16 |
| 3 | 12 |
| 6 | 14 |
| 12 | 30 |

For example, sequence-group hopping may be enabled or disabled by means of the cell-specific parameter *groupHoppingEnabled* provided by higher layers. For example, sequence-group hopping for NPUSCH may be disabled for a certain UE through the higher-layer parameter *groupHoppingDisabled* despite being enabled on a cell basis unless the NPUSCH transmission corresponds to a Random Access Response Grant or a retransmission of the same transport block as part of the contention based random access procedure.

For example, the group-hopping pattern *f*_{gh}(*n'*) may be given by
${f}_{gh} \left(n′\right) = \left({\sum }_{i = 0}^{7} c \left(8n′+i\right) ⋅ {2}^{i}\right) mod {N}_{seq}^{RU}$

For example, where *n'* = *n*ₛ for ${N}_{sc}^{RU} > 1$. For example, when ${N}_{sc}^{RU} = 1$, for frame structure type 1, *n'* may be the slot number *n*ₛ of the first slot of the resource unit and for frame structure type 2, *n'* may be the frame number *n*_{f} of the first slot of the resource unit. For example, the pseudo-random sequence *c*(*i*) may be defined by clause 7.2 of 3GPP TS 36.211.

For example, the pseudo-random sequence generator may be initialized with ${c}_{init} = \left⌊{N}_{ID}^{Ncell}/{N}_{seq}^{RU}\right⌋$ at the beginning of the resource unit for ${N}_{sc}^{RU} = 1$and in every even slot for ${N}_{sc}^{RU} > 1$.

For example, the sequence-shift pattern *f*ₛₛ may be given by
${f}_{ss} = \left({N}_{ID}^{Ncell}+{Δ}_{ss}\right) {modN}_{seq}^{RU}$

For example, where *Δ*ₛₛ ∈ {0,1,...,29} may be given by higher-layer parameter *groupAssignmentNPUSCH.* For example, if no value is signalled, *Δ*ₛₛ = 0.

### 1.1.4.2 Mapping to physical resources

For example, the sequence *r*(·) may be multiplied with the amplitude scaling factor *β*_{NPUSCH} and mapped in sequence starting with *r*(0) to the sub-carriers.

For example, the set of sub-carriers used in the mapping process may be identical to the corresponding NPUSCH transmission as defined in clause 1.1.3.6.

For example, the mapping to resource elements (*k, l*) may be in increasing order of first*k*, then *l,* and finally the slot number. For example, the values of the symbol index *l* in a slot may be given in Table 14.

Table 14: Demodulation reference signal location for NPUSCH.

**[Table 14]**

| NPUSCH format | Values for *l* | |
|---|---|---|
| | *Δf* = 3.75 kHz | *Δf =* 15 kHz |
| 1 | 4 | 3 |
| 2 | 0,1,2 | 2,3,4 |

For example, if higher layer parameter resourceReservationConfigUL is configured, then in case of NPUSCH format 1 transmission associated with C-RNTI or SPS C-RNTI using UE-specific NPDCCH search space and the Resource reservation field in the DCI is set to 1 including NPUSCH format 1 transmission without a corresponding NPDCCH, or in case of NPUSCH format 2 transmission associated with C-RNTI using UE-specific NPDCCH search space,
- In a subframe for *Δf =* 15 kHz or a slot for *Δf* = 3.75 kHz that is overlapping with any fully reserved uplink subframe as defined in clause 2.5 in [4],
   - - for *Δf* = 15 kHz, the demodulation reference signal transmission may be postponed until the next NB-IoT uplink subframe that is not fully reserved.
   - - for *Δf* = 3.75 kHz, the demodulation reference signal transmission in the slot may be postponed until the next slot spanning over two contiguous uplink subframes not overlapping with any uplink subframe that is fully reserved.
- In a subframe for *Δf* = 15 kHzor a slot for *Δf* = 3.75 kHz that is not overlapping with any fully reserved uplink subframe, any demodulation reference signal transmission in SC-FDMA symbols overlapping with reserved symbols may be dropped.

### 1.1.6 Narrowband physical random-access channel

### 1.1.6.1 Time and frequency structure

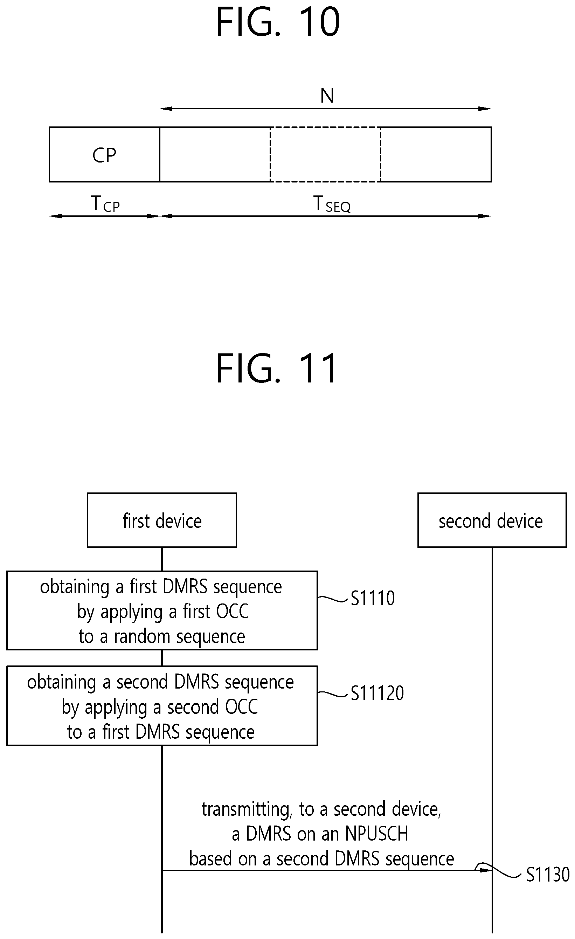

For example, the physical layer random access preamble may be based on single-subcarrier frequency-hopping symbol groups. For example, a symbol group may be illustrated in FIG. 10, may consist of a cyclic prefix of length *T*_{CP} and a sequence of *N* identical symbols with total length*T*_{SEQ}. For example, the total number of symbol groups in a preamble repetition unit may be denoted by *P.* For example, the number of time-contiguous symbol groups may be given by *G.*

FIG. 10 shows a random access symbol group, based on an embodiment of the present disclosure. The embodiment of FIG. 10 may be combined with various embodiments of the present disclosure.

For example, the parameter values for frame structures 1 and 2 may be listed in Tables 15 and 16, respectively.

**Table 15: Random access preamble parameters for frame structure type 1**

| [Table 15] | | | | | |
|---|---|---|---|---|---|
| Preamble format | G | P | N | T_{cp} | T_{seq} |
| 0 | 4 | 4 | 5 | 2048Tₛ | 5 · 8192Tₛ |
| 1 | 4 | 4 | 5 | 8192Tₛ | 5 · 8192Tₛ |
| 2 | 6 | 6 | 3 | 24576Tₛ | 3 · 24576Tₛ |

**Table 16: Random access preamble parameters for frame structure type 2**

| [Table 16] | | | | | | |
|---|---|---|---|---|---|---|
| Preamble format | Supported uplink-downlink configurations | G | P | N | T_{cp} | T_{seq} |
| 0 | 1,2,3,4,5 | 2 | 4 | 1 | 4768Tₛ | 1 · 8192Tₛ |
| 1 | 1, 4 | 2 | 4 | 2 | 8192Tₛ | 2 · 8192Tₛ |
| 2 | 3 | 2 | 4 | 4 | 8192Tₛ | 4 · 8192Tₛ |
| 0-a | 1, 2, 3, 4, 5 | 3 | 6 | 1 | 1536Tₛ | 1 · 8192Tₛ |
| 1-a | 1, 4 | 3 | 6 | 2 | 3072Tₛ | 2 · 8192Tₛ |

For example, the preamble consisting of *P* symbol groups may be transmitted ${N}_{rep}^{NPRACH}$ times. For example, for frame structure type 2, when an invalid uplink subframe overlaps the transmission of *G* symbol groups without a gap, the *G* symbol groups may be dropped. For example, for frame structure type 2, the transmission of *G* symbol groups may be aligned with the subframe boundary.

For example, the transmission of a random-access preamble, if triggered by the MAC layer, may be restricted to certain time and frequency resources.

For example, a NPRACH configuration provided by higher layers may contain the following:
- NPRACH resource periodicity ${N}_{period}^{NPRACH}$ (*nprach-Periodicity*),
- frequency location of the first subcarrier allocated to NPRACH ${N}_{scoffset}^{NPRACH}$ *(nprach-SubcarrierOffset*),
- number of subcarriers allocated to NPRACH ${N}_{sc}^{NPRACH}$ (*nprach-NumSubcarriers*),
- number of starting sub-carriers allocated to UE initiated random access ${N}_{sc_cont}^{NPRACH}$ (*nprach-NumCBRA-StartSubcarriers),*
- number of NPRACH repetitions per attempt ${N}_{rep}^{NPRACH}$ (*numRepetitionsPerPreambleAttempt*),
- NPRACH starting time ${N}_{start}^{NPRACH}$ (*nprach-StartTime*),
- Fraction for calculating starting subcarrier index for the range of NPRACH subcarriers reserved for indication of UE support for multi-tone msg3 transmission ${N}_{MSG 3}^{NPRACH}$ (*nprach-SubcarrierMSG3-RangeStart*)*.*

For example, NPRACH transmission may start only ${N}_{start}^{NPRACH} ⋅ 30720 {T}_{s}$30720*Tₛ* time units after the start of a radio frame fulfilling ${n}_{f} mod \left({N}_{period}^{NPRACH}/10\right) = 0$. For example, for frame structure type 1, after transmissions of 4 · 64(*T*_{CP} + *T*_{SEQ}) time units for preamble formats 0 and 1, or 16 · 6(*T_{CP} + T_{SEQ}*) time units for preamble format 2, a gap of 40 · 30720*Tₛ* time units may be inserted.

For example, NPRACH configurations where ${N}_{scoffset}^{NPRACH} + {N}_{sc}^{NPRACH} > {N}_{sc}^{UL}$ may be invalid.

For example, the NPRACH starting subcarriers allocated to UE initiated random access may be split in two sets of subcarriers, $\left\{0,1,…,\left⌊{N}_{sc_cont}^{NPRACH}{N}_{MSG 3}^{NPRACH}\right⌋-1\right\}$ and $\left\{\left⌊{N}_{sc_cont}^{NPRACH}{N}_{MSG 3}^{NPRACH}\right⌋,…,{N}_{sc_cont}^{NPRACH}-1\right\}$, where the second set, if present, may indicate UE support for multi-tone msg3 transmission.

For example, the frequency location of the NPRACH transmission may be constrained within ${N}_{sc}^{RA} = 12$ sub-carriers, and within ${N}_{sc}^{RA} = 36$ subcarriers when preamble format 2 as described in Table 15 is configured. For example, frequency hopping may be used within the 12 subcarriers and 36 subcarriers when preamble format 2 as described in Table 15 is configured, where the frequency location of the ith symbol group may be given by ${n}_{sc}^{RA} \left(i\right) = {n}_{start} + {{n}^{˜}}_{SC}^{RA} \left(i\right)$ where ${n}_{start} = {N}_{scoffset}^{NPRACH} + \left⌊{n}_{init}>{N}_{sc}^{RA}\right⌋ ⋅ {N}_{sc}^{RA}$ . For example, the quantity ${{n}^{˜}}_{sc}^{RA} \left(i\right)$ may depend on the frame structure.

For example, for frame structure type 1:
- if *G* = 4, *P* = 4 for preamble formats 0 and 1 as described in Table 15:
   ${{n}^{˜}}_{SC}^{RA} \left(i\right) = \left\{\begin{matrix}\left({{n}^{˜}}_{SC}^{RA}\left(0\right)+f\left(i/4\right)\right) {modN}_{sc}^{RA} & i mod 4 = 0 and i > 0 \\ {{n}^{˜}}_{SC}^{RA} \left(i-1\right) + 1 & i mod 4 = 1 , 3 and {{n}^{˜}}_{SC}^{RA} \left(i-1\right) mod 2 = 0 \\ {{n}^{˜}}_{SC}^{RA} \left(i-1\right) - 1 & i mod 4 = 1 , 3 and {{n}^{˜}}_{SC}^{RA} \left(i-1\right) mod 2 = 1 \\ {{n}^{˜}}_{SC}^{RA} \left(i-1\right) + 6 & i mod 4 = 2 and {{n}^{˜}}_{SC}^{RA} \left(i-1\right) < 6 \\ {{n}^{˜}}_{SC}^{RA} \left(i-1\right) - 6 & i mod 4 = 2 and {{n}^{˜}}_{SC}^{RA} \left(i-1\right) \geq 6\end{matrix}\right.$
   $f \left(t\right) = \left(f\left(t-1\right)+\left({\sum }_{n = 10 t + 1}^{10 t + 9} c \left(n\right) {2}^{n - \left(10t+1\right)}\right)mod\left({N}_{sc}^{RA}-1\right)+1\right) {modN}_{sc}^{RA}$
   $f \left(-1\right) = 0$

For example, where ${{n}^{˜}}_{SC}^{RA} \left(0\right) = {n}_{init} mod {N}_{sc}^{RA}$ with *n*ᵢₙᵢₜ being the subcarrier selected by the MAC layer from $\left\{0,1,…,{N}_{sc}^{NPRACH}-1\right\}$, and the pseudo random sequence *c(n)* may be given by clause 7.2 of 3GPP TS 36.211. For example, the pseudo random sequence generator may be initialised with ${c}_{init} = {N}_{ID}^{Ncell}$.
- if G = 6, *P* = 6 for preamble format 2 as described in Table 15:
   ${{n}^{˜}}_{SC}^{RA} \left(i\right) = \left\{\begin{matrix}\left({{n}^{˜}}_{SC}^{RA}\left(0\right)+f\left(i/6\right)\right) {modN}_{sc}^{RA} & i mod 6 = 0 and i > 0 \\ {{n}^{˜}}_{SC}^{RA} \left(i-1\right) + 1 & i mod 6 = 1 , 5 and {{n}^{˜}}_{SC}^{RA} \left(i-1\right) mod 2 = 0 \\ {{n}^{˜}}_{SC}^{RA} \left(i-1\right) - 1 & i mod 6 = 1 , 5 and {{n}^{˜}}_{SC}^{RA} \left(i-1\right) mod 2 = 1 \\ {{n}^{˜}}_{SC}^{RA} \left(i-1\right) + 3 & i mod 6 = 2 , 4 and \left⌊{{n}^{˜}}_{CS}^{RA}\left(i-1\right)/3\right⌋ mod 2 = 0 \\ {{n}^{˜}}_{SC}^{RA} \left(i-1\right) - 3 & i mod 6 = 2 , 4 and \left⌊{{n}^{˜}}_{CS}^{RA}\left(i-1\right)/3\right⌋ mod 2 = 1 \\ {{n}^{˜}}_{SC}^{RA} \left(i-1\right) + 18 & i mod 6 = 3 and {{n}^{˜}}_{SC}^{RA} \left(i-1\right) < 18 \\ {{n}^{˜}}_{SC}^{RA} \left(i-1\right) - 18 & i mod 6 = 3 and {{n}^{˜}}_{SC}^{RA} \left(i-1\right) \geq 18\end{matrix}\right.$
   $f \left(t\right) = \left(f\left(t-1\right)+\left({\sum }_{n = 10 t + 1}^{10 t + 9} c \left(n\right) {2}^{n - \left(10t+1\right)}\right)mod\left({N}_{sc}^{RA}-1\right)+1\right) {modN}_{sc}^{RA}$
   $f \left(-1\right) = 0$

For example, where ${{n}^{˜}}_{SC}^{RA} \left(0\right) = {n}_{init} {modN}_{sc}^{RA}$ with *n*ᵢₙᵢₜ being the subcarrier selected by the MAC layer from $\left\{0,1,…,{N}_{sc}^{NPRACH}-1\right\}$, and the pseudo random sequence *c(n)* may be given by clause 7.2 of 3GPP TS 36.211. For example, the pseudo random sequence generator may be initialised with ${c}_{init} = {N}_{ID}^{Ncell}$.

For example, for frame structure type 2:
- if *G* = 2, *P* = 4 for preamble formats 0, 1, and 2 as described in Table 16:
   ${{n}^{˜}}_{SC}^{RA} \left(i\right) = \left\{\begin{matrix}Y & i mod 8 = 0 , 2 and i > 0 \\ {{n}^{˜}}_{SC}^{RA} \left(i-1\right) + 1 & i mod 8 = 1 and {{n}^{˜}}_{SC}^{RA} \left(i-1\right) = 0 , 2 , 4 , 6 , 8 , 10 \\ {{n}^{˜}}_{SC}^{RA} \left(i-1\right) - 1 & i mod 8 = 1 and {{n}^{˜}}_{SC}^{RA} \left(i-1\right) = 1 , 3 , 5 , 7 , 9 , 11 \\ {{n}^{˜}}_{SC}^{RA} \left(i-1\right) + 6 & i mod 8 = 3 and {{n}^{˜}}_{SC}^{RA} \left(i-1\right) = 0 , 1 , 2 , 3 , 4 , 5 \\ {{n}^{˜}}_{SC}^{RA} \left(i-1\right) - 6 & i mod 8 = 3 and {{n}^{˜}}_{SC}^{RA} \left(i-1\right) = 6 , 7 , 8 , 9 , 10 , 11 \\ 2 \left⌊\frac{Y}{2}\right⌋ + 1 & i mod 8 = 4 and {{n}^{˜}}_{SC}^{RA} \left(i-4\right) = 0 , 2 , 4 , 6 , 8 , 10 \\ 2 \left⌊\frac{Y}{2}\right⌋ & i mod 8 = 4 and {{n}^{˜}}_{SC}^{RA} \left(i-4\right) = 1 , 3 , 5 , 7 , 9 , 11 \\ {{n}^{˜}}_{SC}^{RA} \left(i-1\right) - 1 & i mod 8 = 5 and {{n}^{˜}}_{SC}^{RA} \left(i-1\right) = 1 , 3 , 5 , 7 , 9 , 11 \\ {{n}^{˜}}_{SC}^{RA} \left(i-1\right) + 1 & i mod 8 = 5 and {{n}^{˜}}_{SC}^{RA} \left(i-1\right) = 0 , 2 , 4 , 6 , 8 , 10 \\ Y mod 6 + 6 & i mod 8 = 6 and {{n}^{˜}}_{SC}^{RA} \left(i-4\right) = 0 , 1 , 2 , 3 , 4 , 5 \\ Y mod 6 & i mod 8 = 6 and {{n}^{˜}}_{SC}^{RA} \left(i-4\right) = 6 , 7 , 8 , 9 , 10 , 11 \\ {{n}^{˜}}_{SC}^{RA} \left(i-1\right) - 6 & i mod 8 = 7 and {{n}^{˜}}_{SC}^{RA} \left(i-1\right) = 6 , 7 , 8 , 9 , 10 , 11 \\ {{n}^{˜}}_{SC}^{RA} \left(i-1\right) + 6 & i mod 8 = 7 and {{n}^{˜}}_{SC}^{RA} \left(i-1\right) = 0 , 1 , 2 , 3 , 4 , 5\end{matrix}\right.$
   $Y = \left({{n}^{˜}}_{SC}^{RA}\left(0\right)+f\left(i/2\right)\right) {modN}_{sc}^{RA}$
   $f \left(t\right) = \left(f\left(t-1\right)+\left({\sum }_{n = 10 t + 1}^{10 t + 9} c \left(n\right) {2}^{n - \left(10t+1\right)}\right)mod\left({N}_{sc}^{RA}-1\right)+1\right) {modN}_{sc}^{RA}$
   $f \left(-1\right) = 0$

For example, where ${{n}^{˜}}_{SC}^{RA} \left(0\right) = {n}_{init} {modN}_{sc}^{RA}$ with *n*ᵢₙᵢₜ being the subcarrier selected by the MAC layer from $\left\{0,1,…,{N}_{sc}^{NPRACH}-1\right\}$, and the pseudo random sequence *c(n)* may be given by clause 7.2 of 3GPP TS 36.211. For example, the pseudo random sequence generator may be initialised with ${c}_{init} = {N}_{ID}^{Ncell}$.
- if *G* = 3, *P* = 6 for preamble formats 0-a, 1-a, as described in Table 16:
   ${{n}^{˜}}_{SC}^{RA} \left(i\right) = \left\{\begin{matrix}\left({{n}^{˜}}_{SC}^{RA}\left(0\right)+f\left(i/3\right)\right) {modN}_{sc}^{RA} & i mod 6 = 0 , 3 and i > 0 \\ {{n}^{˜}}_{SC}^{RA} \left(i-1\right) + 1 & i mod 6 = 1 and {{n}^{˜}}_{SC}^{RA} \left(i-1\right) = 0 , 2 , 4 , 6 , 8 , 10 \\ {{n}^{˜}}_{SC}^{RA} \left(i-1\right) - 1 & i mod 6 = 2 and {{n}^{˜}}_{SC}^{RA} \left(i-2\right) = 0 , 2 , 4 , 6 , 8 , 10 \\ {{n}^{˜}}_{SC}^{RA} \left(i-1\right) - 1 & i mod 6 = 1 and {{n}^{˜}}_{SC}^{RA} \left(i-1\right) = 1 , 3 , 5 , 7 , 9 , 11 \\ {{n}^{˜}}_{SC}^{RA} \left(i-1\right) + 1 & i mod 6 = 2 and {{n}^{˜}}_{SC}^{RA} \left(i-2\right) = 1 , 3 , 5 , 7 , 9 , 11 \\ {{n}^{˜}}_{SC}^{RA} \left(i-1\right) + 6 & i mod 6 = 4 and {{n}^{˜}}_{SC}^{RA} \left(i-2\right) = 0 , 1 , 2 , 3 , 4 , 5 \\ {{n}^{˜}}_{SC}^{RA} \left(i-1\right) - 6 & i mod 6 = 5 and {{n}^{˜}}_{SC}^{RA} \left(i-2\right) = 0 , 1 , 2 , 3 , 4 , 5 \\ {{n}^{˜}}_{SC}^{RA} \left(i-1\right) - 6 & i mod 6 = 4 and {{n}^{˜}}_{SC}^{RA} \left(i-1\right) = 6 , 7 , 8 , 9 , 10 , 11 \\ {{n}^{˜}}_{SC}^{RA} \left(i-1\right) + 6 & i mod 6 = 5 and {{n}^{˜}}_{SC}^{RA} \left(i-2\right) = 6 , 7 , 8 , 9 , 10 , 11\end{matrix}\right.$
   $f \left(t\right) = \left(f\left(t-1\right)+\left({\sum }_{n = 10 t + 1}^{10 t + 9} c \left(n\right) {2}^{n - \left(10t+1\right)}\right)mod\left({N}_{sc}^{RA}-1\right)+1\right) mod {N}_{sc}^{RA}$
   $f \left(-1\right) = 0$

For example, where ${{n}^{˜}}_{SC}^{RA} \left(0\right) = {n}_{init} {modN}_{sc}^{RA}$ with *n*ᵢₙᵢₜ being the subcarrier selected by the MAC layer from $\left\{0,1,…,{N}_{sc}^{NPRACH}-1\right\}$, and the pseudo random sequence *c(n)* may be given by clause 7.2 of 3GPP TS 36.211. For example, the pseudo random sequence generator may be initialised with ${c}_{init} = {N}_{ID}^{Ncell}$.

### 2.5 Narrowband physical uplink shared channel related procedures

For example, for a NB-IoT UE that supports *twoHARQ-Processes-r14* or the UE is configured with higher layer parameter *npusch-MultiTB-Config,* there may be a maximum of 2 uplink HARQ processes.

For example, for a NB-IoT UE and NPUSCH transmission using preconfigured uplink resource, there may be 1 uplink HARQ process.

For example, a NB-IoT UE may determine whether a subframe is a NB-IoT UL subframe as follows

For example, in a future system, there may be a need to increase multiplexing capacity between transmissions of an NB-IoT UE, and the importance thereof may be high particularly in an IoT NTN system.
- If higher layer parameter *resourceReservationConfigUL* is configured
   - - for NPUSCH format 1 transmission associated with C-RNTI or SPS C-RNTI using UE-specific NPDCCH search space including NPUSCH format 1 transmission without a corresponding NPDCCH
   - - - if the Resource reservation field in the DCI is set to 0, then the subframe may be assumed as a NB-IoT UL subframe
   - - - else if the Resource reservation field in the DCI is set to 1, then the subframe may be assumed as a NB-IoT UL subframe if it is not fully reserved according to the higher layer parameters (a subframe may be considered fully reserved if and only if all SC-FDMA symbols are reserved in the subframe).
   - - for NPUSCH format 2 transmission
   - - - the subframe may be assumed as a NB-IoT UL subframe if it is not fully reserved according to the higher layer parameters (a subframe may be considered fully reserved if and only if all SC-FDMA symbols are reserved in the subframe).
- In all other cases,
   - - for TDD, a NB-IoT UE may assume a subframe as a NB-IoT UL subframe if, for a NB-IoT carrier, it is configured as NB-IoT UL subframe by higher layers
   - - for FDD, a NB-IoT UE may always assume a subframe as a NB-IoT UL subframe.

### 2.5.1 UE procedure for transmitting format 1 narrowband physical uplink shared channel

For example, NPUSCH format 1 transmission may be scheduled by a NPDCCH with DCI format N0, or the transmission may correspond to using preconfigured uplink resource configured by higher layers. For example, transmission using preconfigured uplink resource may be initiated by higher layers as specified in [14], while retransmission of transport blocks transmitted using preconfigured uplink resource may be scheduled by a NPDCCH with DCI format N0.

For example, a UE may upon detection on a given serving cell of a NPDCCH with DCI format N0 ending in NB-IoT DL subframe n scheduling NPUSCH intended for the UE, perform, at the end of
- n+k0+Koffset DL subframe for FDD,
- k0 NB-IoT UL subframes following the end of n+8 subframe for TDD,

For example, a corresponding NPUSCH transmission using NPUSCH format 1 in N consecutive NB-IoT UL slots ni with i = 0, 1, ..., N-1 according to the NPDCCH information where
- subframe n may be the last subframe in which the NPDCCH is transmitted and may be determined from the starting subframe of NPDCCH transmission and the DCI subframe repetition number field in the corresponding DCI; and
- $N = {N}_{TB} {N}_{Rep} {N}_{RU} {N}_{slots}^{UL}$, where the value of *N*_{Rep} may be determined as specified in Clause 2.5.1.1, the value of *N*_{RU} may be determined by the resource assignment field in the corresponding DCI (see Clause 2.5.1.1), the value of ${N}_{slots}^{UL}$ may be the number of NB-IoT UL slots of the resource unit (defined in clause 1.1.2.3 of [3]) corresponding to the ${N}_{sc}^{RU}$ allocated number of subcarriers (as determined in Clause 2.5.1.1) in the corresponding DCI, and the value of *N*_{TB} may be determined by the Number of scheduled TB for Unicast field, if present, in the corresponding DCI, *N*_{TB} = 1 otherwise
- n0 may be the first NB-IoT UL slot starting after the end of subframe n+k0+Koffset for FDD
- n0 may be the first NB-IoT UL slot starting after k0 NB-IoT UL subframes following the end of n+8 subframe for TDD
- value of k0 may be determined by the scheduling delay field (*I*_{Delay}) in the corresponding DCI according to Table 17 for FDD and Table 18 for TDD
- For *N*_{TB} > 1,
   - - if the UE is configured with higher layer parameter *npusch-MultiTB-Config* set to 'interleaved', and NPUSCH corresponding to a NPDCCH with DCI CRC scrambled by C-RNTI, and *N*_{Rep} > *C* where *C* = 1 for ${N}_{sc}^{RU} = 1$, *C* = 4 otherwise.
   - - - NB-IoT UL slots *n*_{*g*·(*c*·*N*_{TB}+*r*)+*l*} with *l* = 0,1, ... *g* - 1, *c* = 0,1, ... *N*_{Rep}/*C* - 1, $g = {CN}_{RU} {N}_{slots}^{UL}$ may be associated with TBr+1 , *r* = 0,1, ...*N*_{TB} - 1
   - - otherwise,
   - - - NB-IoT UL slots ${n}_{r ⋅ {N}_{Rep} {N}_{RU} {N}_{slots}^{UL} + l}$ with $l = 0 , 1 , … {N}_{Rep} {N}_{RU} {N}_{slots}^{UL} - 1$ may be associated with TBr+1 , *r* = 0,1, ...*N*_{TB} - 1

Table 17: *k*₀ for DCI format N0 for FDD.

**[Table 17]**

| *I*_{Delay} | *k*₀ |
|---|---|
| 0 | 8 |
| 1 | 16 |
| 2 | 32 |
| 3 | 64 |

Table 18: *k*₀ for DCI format N0 for TDD.

**[Table 18]**

| *I*_{Delay} | *k*₀ |
|---|---|
| 0 | 0 |
| 1 | 8 |
| 2 | 16 |
| 3 | 32 |

For example, if a NPUSCH transmission without a corresponding NPDCCH collides partially or fully with a NPDSCH transmission, the NPUSCH transmission may be dropped.

For example, if a UE is configured by higher layers to decode NPDCCHs with the CRC scrambled by the C-RNTI, the UE may decode the NPDCCH according to the combination defined in Table 19 and transmit a corresponding NPUSCH. For example, the scrambling initialization of this NPUSCH corresponding to these NPDCCHs and the NPUSCH retransmission for the same transport block may be by C-RNTI.

**Table 19: NPDCCH and NPUSCH configured by C-RNTI**

| [Table 19] | |
|---|---|
| DCI format | Search Space |
| DCI format N0 | UE specific by C-RNTI |

For example, if a UE is configured to receive random access procedures initiated by "PDCCH orders", the UE may decode the NPDCCH according to the combination defined in Table 20.

**Table 20: NPDCCH configured as "PDCCH order" to initiate random access procedure**

| [Table 20] | |
|---|---|
| DCI format | Search Space |
| DCI format N1 | UE specific by C-RNTI |

For example, if a UE is configured by higher layers to decode NPDCCHs with the CRC scrambled by the Temporary C-RNTI regardless of whether UE is configured or not configured to decode NPDCCH with the CRC scrambled by the C-RNTI during random access procedure, the UE may decode the NPDCCH according to the combination defined in Table 21 and transmit the corresponding NPUSCH. For example, the scrambling initialization of NPUSCH corresponding to these NPDCCHs may be by Temporary C-RNTI.

For example, if a Temporary C-RNTI is set by higher layers, the scrambling initialization of NPUSCH corresponding to the Narrowband Random Access Response Grant in Clause 16.3.3 of 3GPP TS 36.213 and any NPUSCH retransmission(s) for the same transport block may be by Temporary C-RNTI. For example, otherwise, the scrambling initialization of NPUSCH corresponding to the Narrowband Random Access Response Grant in Clause 16.3.3 of 3GPP TS 36.213 and any NPUSCH retransmission(s) for the same transport block may be by C-RNTI.

For example, if a UE is also configured by higher layers to decode NPDCCH with CRC scrambled by the C-RNTI during random access procedure, the UE may decode the NPDCCH according to the combination defined in Table 21 and transmit the corresponding NPUSCH. For example, the scrambling initialization of NPUSCH corresponding to these NPDCCH may be by C-RNTI.

**Table 21: NPDCCH and NPUSCH configured by Temporary C-RNTI and/or C-RNTI during random access procedure**

| [Table 21] | |
|---|---|
| DCI format | Search Space |
| DCI format N0 | Type-2 Common |

For example, if a UE is configured by higher layers to decode NPDCCHs with the CRC scrambled by the SPS C-RNTI, the UE may decode the NPDCCH according to the combination defined in Table 22 and transmit a corresponding NPUSCH if a transport block corresponding to the HARQ process of the NPUSCH transmission is generated as described in [8]. For example, the scrambling initialization of this NPUSCH corresponding to these NPDCCHs and NPUSCH retransmission for the same transport block may be by SPS C-RNTI. For example, the scrambling initialization of initial transmission of this NPUSCH without a corresponding NPDCCH and the NPUSCH retransmission for the same transport block may be by SPS C-RNTI.

**Table 22: NPDCCH and NPUSCH configured by SPS C-RNTI**

| [Table 22] | |
|---|---|
| DCI format | Search Space |
| DCI format N0 | UE specific by C-RNTI |

For example, a UE may transmit NPUSCH on preconfigured uplink resources as configured by higher layers. For example, the scrambling initialization of NPUSCH transmission using preconfigured uplink resource may be by PUR-RNTI.

For example, if a UE is configured by higher layers to decode NPDCCHs with the CRC scrambled by the PUR-RNTI, the UE may decode the NPDCCH according to the combination defined in Table 23 and in case the indication in the DCI corresponds to the retransmission of a transport block transmitted using preconfigured uplink resource, transmit a corresponding NPUSCH. For example, the scrambling initialization of this NPUSCH corresponding to these NPDCCHs and the NPUSCH retransmission for the same transport block may be by PUR-RNTI.

**Table 23: NPDCCH and NPUSCH configured by PUR-RNTI**

| [Table 23] | |
|---|---|
| DCI format | Search Space |
| DCI format N0 | UE specific by PUR-RNTI |

### 2.5.1.1 Resource allocation

For example, the resource allocation information in uplink DCI format N0 for NPUSCH transmission or configured by higher layers for NPUSCH transmission using preconfigured uplink resource may indicate to a scheduled UE
- a set of contiguously allocated subcarriers (*n*_{sc}) of a resource unit determined by the Subcarrier indication field, or by the higher layer parameter *npusch-SubCarrierSetIndex* in *PUR-Config-NB*
- a number of resource units (*N*_{RU}) determined by the resource assignment field according to Table 25, or by the higher layer parameter *npusch-NumRUsIndex* in *PUR-Config-NB*
- a repetition number (*N*_{Rep}) determined by the repetition number field according to Table 26, and for a NPUSCH transmission using preconfigured uplink resource, the UE may use the repetition number configured by higher layers; except for NPUSCH with 16QAM where *N*_{Rep} = 1.

For example, the subcarrier spacing Δ*f* of NPUSCH transmission may be determined by
- the higher layer parameter *npusch-SubCarrierSetIndex*, in the case of NPUSCH transmission using preconfigured uplink resources and subsequent NPUSCH transmissions until a Narrowband Random Access Response Grant is received,
- the uplink subcarrier spacing field in the Narrowband Random Access Response Grant according to Clause 16.3.3 of 3GPP TS 36.213 otherwise.

For example, for NPUSCH transmission with subcarrier spacing Δ*f* = 3.75 kHz, *n*_{sc} = *I_{SC}* where *I_{SC}* may be the subcarrier indication field and *I_{SC}* = 48,49,...,63 may be reserved, or nsc may be configured by higher layers parameter *npusch-SubCarrierSetIndex* in *PUR-Config-NB* for NPUSCH transmissions using preconfigured uplink resources.

For example, for NPUSCH transmission with subcarrier spacingΔ*f* = 15 kHz, the subcarrier indication field (*I_{SC}*) in the DCI or *npusch-SubCarrierSetIndex* in *PUR-Config-NB* for NPUSCH transmissions using preconfigured uplink resources may determine the set of contiguously allocated subcarriers (*n*_{sc}) according to Table 24.

Table 24: Allocated subcarriers for NPUSCH with Δ*f* = 15 kHz.

**[Table 24]**

| Subcarrier indication field (*I_{SC}*) | Set of Allocated subcarriers (*n*_{sc}) |
|---|---|
| 0-11 | *I_{SC}* |
| 12-15 | 3(*I_{SC}* - 12) + {0,1,2} |
| 16-17 | 6(*I_{SC}* - 16) + {0,1,2,3,4,5} |
| 18 | {0,1,2,3,4,5,6,7,8,9,10,11} |
| 19-63 | Reserved |

Table 25: Number of resource units (*N*_{RU}) for NPUSCH.

**[Table 25]**

| *I*_{RU} | *N*_{RU} |
|---|---|
| 0 | 1 |
| 1 | 2 |
| 2 | 3 |
| 3 | 4 |
| 4 | 5 |
| 5 | 6 |
| 6 | 8 |
| 7 | 10 |

Table 26: Number of repetitions (*N*_{Rep}) for NPUSCH.

**[Table 26]**

| *I*_{Rep} | *N*_{Rep} |
|---|---|
| 0 | 1 |
| 1 | 2 |
| 2 | 4 |
| 3 | 8 |
| 4 | 16 |
| 5 | 32 |
| 6 | 64 |
| 7 | 128 |

### 2.5.1.2 Modulation order, redundancy version and transport block size determination

For example, to determine the modulation order, redundancy version and transport block size for the NPUSCH, the UE may first
- read the "modulation and coding scheme" field (*I*_{MCS}) in the DCI or configured by higher layers for NPUSCH transmission using preconfigured uplink resource, and
- read the "redundancy version" field (*rv*_{DCI}) in the DCI or initiate with *rv*_{DCI} = 0 for NPUSCH transmission using preconfigured uplink resource, and
- read the "resource assignment" field (*I*_{RU}) in the DCI or configured by higher layers for NPUSCH transmission using preconfigured uplink resource, and
- compute the total number of allocated subcarriers ( ${N}_{sc}^{RU}$), number of resource units (*N*_{RU}), and repetition number (*N*_{Rep}) according to Clause 2.5.1.1.

For example, if the UE is configured with higher layer parameter edt-Parameters and the most recent NPUSCH transmission including a transport block with EDT, the UE may not be expected to receive a DCI indicating a NPUSCH retransmission as part of the contention based random access procedure with 3 ≤ IMCS ≤ 14.

For example, if the UE is configured with higher layer parameter *edt-Parameters,* and for a NPUSCH retransmission of the same transport block including EDT as part of the contention based random access procedure with *I*_{MCS} = 15 in the DCI,
- the modulation order may be set to *Qₘ* = 2.
- if the UE is configured with higher layer parameter *edt-SmallTBS-Enabled* set to 'true', the repetition number for the NPUSCH retransmission may be the smallest integer multiple of L value that is equal to or larger than $\frac{{TBS}_{Msg 3}}{{TBS}_{Msg 3 , max}} ⋅ {N}_{Rep}$ where *TBS*_{Msg3} may be the TBS corresponding to the NPUSCH transmission scheduled by the Narrowband Random Access Response Grant, and *TBS*_{Msg3,*max*} may be given by the higher layer parameter *edt-TBS.*

For example, elseif the UE is configured with higher layer parameter *edt-Parameters,* and if the DCI indicates a retransmission as part of the contention based random access procedure with 0 ≤ *I*_{MCS} ≤ 2 and the most recent NPUSCH transmission including a transport block with EDT,
- the TBS and modulation may be determined according to Table 27, for 0 ≤ *I*_{MCS} ≤ 2 and the transport block may not include EDT

**Table 27: MCS index for Msg3 NPUSCH**

| [Table 27] | | | | |
|---|---|---|---|---|
| MCS Index *I*_{MCS} | Modulation | Modulation | Number of RUs | TBS |
| | *Δf* = 3.75 kHz or *Δf =* 15 kHz and *I_{SC} =* 0,1,...,11 | *Δf =* 15 kHz and *I_{SC}* > 11 | *N*_{RU} | |
| '000' | pi/2 BPSK | QPSK | 4 | 88 bits |
| '001' | pi/4 QPSK | QPSK | 3 | 88 bits |
| '010' | pi/4 QPSK | QPSK | 1 | 88 bits |
| '011' | reserved | reserved | reserved | reserved |
| '100' | reserved | reserved | reserved | reserved |
| '101' | reserved | reserved | reserved | reserved |
| '110' | reserved | reserved | reserved | reserved |
| '111' | reserved | reserved | reserved | reserved |

For example, elseif the UE is configured with higher layer parameter *npusch-16QAM-Config,* and the DCI is mapped onto the UE specific search space and *I*_{MCS} set to '1111', or for NPUSCH transmission using preconfigured uplink resource and higher layer parameter *pur-UL-16QAM-Config* configured, *Qₘ=* 4

For example, otherwise, the UE may use modulation order, *Qₘ=* 2 if ${N}_{sc}^{RU} > 1$. For example, the UE may use *I*_{MCS} and Table 28 to determine the modulation order to use for NPUSCH if ${N}_{sc}^{RU} = 1$.

Table 28: Modulation and TBS index table for NPUSCH with ${N}_{sc}^{RU} = 1$.

**[Table 28]**

| MCS Index | Modulation Order | TBS Index |
|---|---|---|
| *I*_{MCS} | *Qₘ* | *I*_{TBS} |
| 0 | 1 | 0 |
| 1 | 1 | 2 |
| 2 | 2 | 1 |
| 3 | 2 | 3 |
| 4 | 2 | 4 |
| 5 | 2 | 5 |
| 6 | 2 | 6 |
| 7 | 2 | 7 |
| 8 | 2 | 8 |
| 9 | 2 | 9 |
| 10 | 2 | 10 |

For example, if the UE is configured with higher layer parameter *npusch-MultiTB-Config* and multiple TB are scheduled in the corresponding DCI, *rv*_{DCI} may be used for each TB.

For example, the NPUSCH associated with a TB may be transmitted in N NB-IoT UL slots associated with the TB, ni , i=0,1,...,N-1. For example, for the NPUSCH transmission in jth block of B consecutive NB-IoT UL slots associated with the TB ni, *i = jB + b, b =* 0,1, ... , *B -* 1, $j = 0 , 1 , … , \frac{{N}_{Rep}}{L} - 1 , B = {LN}_{RU} {N}_{slots}^{UL}$, the redundancy version *rv*_{idx}(*j*) associated with the TB may be determined by, *rv*_{idx}(*j*) = 2 · *mod*(*rv*_{DCI} + *j*, 2), where L = 1 if ${N}_{sc}^{RU} = 1 , L = min \left(4, \left⌈{N}_{Rep}/2\right⌉\right)$ otherwise. For example, portion of NPUSCH codeword with *rv*_{idx}(*j*) associated with a TB as defined in clause 6.3.2 of 3GPP TS 36.213 in [4] mapped to slot $\left⌊\frac{b}{L}\right⌋$ of allocated *N*_{RU} resource unit(s) may be transmitted in NB-IoT UL slots associated with the TB ni *i = jB +* $L \left⌊\frac{b}{L}\right⌋ + l$, *l* = 0,1, ... , *L* - 1 for Δ*f* = 3.75kHzand $i = jB + 2 L \left⌊\frac{b}{2 L}\right⌋ + 2 l + mod \left(\left⌊\frac{b}{L}\right⌋, 2\right)$, *l* = 0,1,*.*..*L* - 1 for Δ*f =* 15*kHz*

For example, the UE may use (*I*_{TBS},*I*_{RU}) and Table 29 to determine the TBS to use for the NPUSCH. For example, *I*_{TBS} may be given in Table 28 if ${N}_{sc}^{RU} = 1$, or ${I}_{TBS} = {I}_{MCS}^{′} + 14$ if NPUSCH with 16QAM except for NPUSCH transmission using preconfigured uplink resource in which case *I*_{TBS} is given by higher layers in *PUR-Config-NB, I*_{TBS} = *I*_{MCS} otherwise. For example, ${I}_{MCS}^{′}$ may be the value of the "modulation and coding scheme for 16QAM" in the DCI.
- If NPUSCH with 16QAM 14 ≤ *I*_{TBS} ≤ 21, otherwise 0 ≤ *I*_{TBS} ≤ 13.

Table 29: Transport block size (TBS) table for NPUSCH.

**[Table 29]**

| *I*_{TBS} | *I*_{RU} | | | | | | |
|---|---|---|---|---|---|---|---|
| | 0 | 1 | 2 | 3 | 4 | 5 | 6 |
| 0 | 16 | 32 | 56 | 88 | 120 | 152 | 208 |
| 1 | 24 | 56 | 88 | 144 | 176 | 208 | 256 |
| 2 | 32 | 72 | 144 | 176 | 208 | 256 | 328 |
| 3 | 40 | 104 | 176 | 208 | 256 | 328 | 440 |
| 4 | 56 | 120 | 208 | 256 | 328 | 408 | 552 |
| 5 | 72 | 144 | 224 | 328 | 424 | 504 | 680 |
| 6 | 88 | 176 | 256 | 392 | 504 | 600 | 808 |
| 7 | 104 | 224 | 328 | 472 | 584 | 712 | 1000 |
| 8 | 120 | 256 | 392 | 536 | 680 | 808 | 1096 |
| 9 | 136 | 296 | 456 | 616 | 776 | 936 | 1256 |
| 10 | 144 | 328 | 504 | 680 | 872 | 1000 | 1384 |
| 11 | 176 | 376 | 584 | 776 | 1000 | 1192 | 1608 |
| 12 | 208 | 440 | 680 | 1000 | 1128 | 1352 | 1800 |
| 13 | 224 | 488 | 744 | 1032 | 1256 | 1544 | 2024 |
| 14 | 256 | 552 | 840 | 1128 | 1416 | 1736 | 2280 |
| 15 | 280 | 600 | 904 | 1224 | 1544 | 1800 | 2472 |
| 16 | 328 | 632 | 968 | 1288 | 1608 | 1928 | 2536 |
| 17 | 336 | 696 | 1064 | 1416 | 1800 | 2152 | |
| 18 | 376 | 776 | 1160 | 1544 | 1992 | 2344 | |
| 19 | 408 | 840 | 1288 | 1736 | 2152 | 2536 | |
| 20 | 440 | 904 | 1384 | 1864 | 2344 | | |
| 21 | 488 | 1000 | 1480 | 1992 | 2536 | | |

For example, for a NPDCCH UE-specific search space, if the UE is configured with higher layer parameter *twoHARQ-ProcessesConfig*, or the UE is configured with higher layer parameter *npusch-MultiTB-Config* and single TB is scheduled in the corresponding DCI
- the NDI and HARQ process ID as signalled on NPDCCH, and the RV and TBS, as determined above, may be delivered to higher layers,

For example, otherwise
- the NDI as signalled on NPDCCH, and the RV and TBS, as determined above, may be delivered to higher layers. If the UE is configured with higher layer parameter *npusch-MultiTB-Config* and multiple TB are scheduled in the corresponding DCI, HARQ process ID of 0 shall be assumed for the first TB and HARQ process ID of 1 may be assumed for the second TB.

### 2.5.2 UE procedure for NPUSCH retransmission

For example, for a NPUSCH retransmission, the UE may follow the HARQ information in DCI as specified in [8].

For example, it may be necessary to support code division multiplexing (CDM) among different NPUSCH DMRSs using the same time/frequency resource.

Various embodiments of the present disclosure, or combinations thereof, may be independently applied to single-tone transmissions and multi-tone transmissions.

Various embodiments of the present disclosure, or combinations thereof, may be independently applied according to a number of allocated subcarriers for transmission.

Various embodiments of the present disclosure, or combinations thereof, may be independently applied according to transmission content of an NPUSCH (e.g., SIB1-NB, SIB, paging, information related to a random access procedure, or other data).

In an embodiment of the present disclosure, a multiplexing-related parameter for an NPUSCH DMRS may be implicitly determined through a multiplexing-related parameter for NPUSCH data, and/or determination in a reverse direction may also be extended and applied.

Various embodiments of the present disclosure, or combinations thereof, may be independently applied according to a payload type of a satellite (e.g., regenerative payload or transparent payload).

Various embodiments of the present disclosure, or combinations thereof, may be independently applied according to a type of a non-terrestrial network node (e.g., GEO, NGEO, LEO, MEO, HASP, or drone), an altitude, a fixed beam footprint, or a cell-moving beam footprint.

Various embodiments of the present disclosure, or combinations thereof, may be independently applied according to whether an NB-IoT UL transmission occurs on a preconfigured UL resource.

For example, for an NPUSCH (format 1) transmission for which a number of allocated subcarriers is greater than 1, an OCC may be applied to a DMRS sequence in a subcarrier domain.

For example, a length of the OCC may be identical to a number of allocated subcarriers for the NPUSCH transmission.

For example, the OCC index, the OCC sequence, or a candidate value thereof may be configured per cell and/or per UE and/or for each of DG NPUSCH and SPS NPUSCH through cell-specific and/or UE-specific RRC.

For example, the OCC index or the OCC sequence may be indicated in a DCI format scheduling an NPUSCH or indicating SPS activation.

For example, the OCC index or the OCC sequence may be determined based on a resource of an NPDCCH for a DCI format scheduling an NPUSCH (e.g., a lowest or highest NCCE, or NREG, or PRB, or subcarrier, or NPDCCH candidate index, or an aggregation level, or a repetition number).

For example, for an NPUSCH (format 1) transmission for which a number of allocated subcarriers is greater than 1, a cyclic shift value for a DMRS sequence may be configured/indicated/determined differently among NPUSCH transmissions of different UEs within the same NB-IoT cell or within a footprint of the same serving satellite.

For example, information related to a cyclic shift value and/or a cyclic shift candidate value may be configured per cell and/or per UE and/or for each of DG NPUSCH and SPS NPUSCH through cell-specific and/or UE-specific RRC.

For example, the cyclic shift value may be indicated in a DCI format scheduling an NPUSCH or indicating SPS activation.

For example, the cyclic shift value may be determined based on a resource of an NPDCCH for a DCI format scheduling an NPUSCH (e.g., a lowest or highest NCCE, or NREG, or PRB, or subcarrier, or NPDCCH candidate index, or an aggregation level, or a repetition number).

For example, for an NPUSCH (format 1) transmission for which a number of allocated subcarriers is greater than 1, a plurality of DMRS sequences or indexes corresponding thereto may be allowed within the same NB-IoT cell or within a footprint of the same serving satellite.

For example, an additional second DMRS sequence index may be determined based on a first DMRS sequence selected based on a cell ID. For example, a pre-defined offset value or an offset value configured by RRC may be applied (addition and/or a modulo function).

For example, the additional second DMRS sequence index may be configured through cell-specific and/or UE-specific RRC signaling.

For example, the second DMRS sequence may be selected from the same set as a candidate set for the first DMRS sequence.

For example, the second DMRS sequence may be selected from a set separate from a candidate set for the first DMRS sequence.

For example, when a UE transmits an NPUSCH, whether to use the first DMRS sequence and/or whether to use the second DMRS sequence may be indicated in a DCI format scheduling the NPUSCH or indicating SPS activation.

For example, when a UE transmits an NPUSCH, whether to use the first DMRS sequence and/or whether to use the second DMRS sequence may be determined based on a resource of an NPDCCH for a DCI format scheduling the NPUSCH (e.g., a lowest or highest NCCE, or NREG, or PRB, or subcarrier, or NPDCCH candidate index, or an aggregation level, or a repetition number).

For example, for an NPUSCH (format 1) transmission for which a number of allocated subcarriers is 1, a plurality of DMRS OCC sequences or indexes corresponding thereto may be allowed within the same NB-IoT cell or within a footprint of the same serving satellite.

For example, an additional second DMRS OCC sequence index may be determined based on a first DMRS OCC sequence selected based on a cell ID. For example, a pre-defined offset value or an offset value configured by RRC may be applied (addition and/or a modulo function).

For example, the additional second DMRS OCC sequence index may be configured through cell-specific and/or UE-specific RRC signaling.

For example, the second DMRS OCC sequence may be selected from the same set as a candidate set for the first DMRS sequence.

For example, the second DMRS OCC sequence may be selected from a set separate from a candidate set for the first DMRS sequence.

For example, when a UE transmits an NPUSCH, whether to use the first DMRS OCC sequence and/or whether to use the second DMRS OCC sequence may be indicated in a DCI format scheduling the NPUSCH or indicating SPS activation.

For example, when a UE transmits an NPUSCH, whether to use the first DMRS sequence and/or whether to use the second DMRS sequence may be determined based on a resource of an NPDCCH for a DCI format scheduling the NPUSCH (e.g., a lowest or highest NCCE, or NREG, or PRB, or subcarrier, or NPDCCH candidate index, or an aggregation level, or a repetition number).

For example, for an NPUSCH (format 1) transmission for which a number of allocated subcarriers is 1, a plurality of DMRS sequences may be allowed within the same NB-IoT cell or within a footprint of the same serving satellite.

For example, a random seed value for generating a pseudo-random sequence for generating an additional first DMRS sequence may be configured per cell and/or per UE and/or for each of DG NPUSCH and SPS NPUSCH through cell-specific and/or UE-specific RRC.

For example, the additional random seed value may be in a form of an offset value applied to a random seed value for the first DMRS sequence.

For example, when a UE transmits an NPUSCH, whether to use the first DMRS sequence and/or whether to use the second DMRS sequence may be indicated in a DCI format scheduling the NPUSCH or indicating SPS activation. For example, whether to use the first DMRS sequence and/or whether to use the second DMRS sequence may be different according to an OCC index for data and/or a DMRS (for CDM within a cell). For example, when an OCC codeword is [1 ... 1] or [1 1], the first DMRS sequence may be used, and/or when the OCC codeword is [1 -1 ... 1 -1] or [1 -1], the second DMRS sequence may be used.

For example, when a UE transmits an NPUSCH, whether to use the first DMRS sequence and/or whether to use the second DMRS sequence may be determined based on a resource of an NPDCCH for a DCI format scheduling the NPUSCH (e.g., a lowest or highest NCCE, or NREG, or PRB, or subcarrier, or NPDCCH candidate index, or an aggregation level, or a repetition number).

For example, when multiplexing capacity is improved through application of an OCC to NPUSCH format 1, a number of DMRS symbols within a slot may be increased.

For example, when an OCC is applied to at least data symbols for NPUSCH format 1, a DMRS pattern of NPUSCH format 1 may inherit a DMRS pattern of NPUSCH format 2. For example, in the above case, a time-domain OCC may be applied to DMRS symbols within a slot. For example, in the above case, an OCC having a length of 4 may be applied to data symbols, and a Hadamard-Walsh code may be used. For example, in the above case, an OCC having a length of 2 may be applied to data symbols by grouping every two consecutive symbols.

For example, DMRS symbols in adjacent slots may have a structure in which they are adjacent to each other. For example, in an even slot, DMRS may be mapped to symbols having indexes 5 and 6 or to last N consecutive symbols (e.g., N=2 or 3) within the slot, and/or in an odd slot, DMRS may be mapped to symbols having indexes 0 and 1 or to first M consecutive symbols (e.g., M=2 or 3) within the slot. For example, an OCC may be applied to data symbols before and/or after a DMRS symbol region for adjacent two slots.

For example, a DMRS pattern and/or a number of DMRS symbols of NPUSCH format 1 may be determined differently according to whether OCC activation is indicated/configured and/or according to an OCC index value being indicated/configured.

For example, when a scheme for applying an OCC to NPUSCH (format 1) or improving multiplexing capacity is applied, and/or when a DMRS pattern of NPUSCH format 1 is changed, a UE may expect that a number of DMRS symbols included in each slot is an odd number. For example, a reason therefor may be to make a number of data symbols a multiple of 2 or a multiple of 4 such that an OCC having a length of 2 or 4 may be applied to the data symbols.

For example, when a scheme for applying an OCC to NPUSCH (format 1) or improving multiplexing capacity is applied, DMRS time division multiplexing (TDM) among different NPUSCH transmissions using the same time-frequency resource or having entirely or partially overlapping time-frequency resources may be considered. As an example, with respect to DMRS symbol locations n0, n1, n2, n3, n4, ... for an NPUSCH transmission, a specific NPUSCH may perform transmission at DMRS symbol locations n0, n1, n4, n5, ..., and another NPUSCH (subjected to CDM) may perform transmission at DMRS symbol locations n2, n3, n6, n7, ....

For example, in order to support DMRS TDM for a DMRS sequence for a conventional NPUSCH to which an OCC is not applied and/or for a time-domain OCC (e.g., for cell randomization), sequence values and/or time-domain OCC values corresponding to DMRS symbol locations at which an actual DMRS is not transmitted may be excluded (e.g., intermittently). An advantage thereof is that, for transmission forms of two multiplexed NPUSCHs, a DMRS sequence and/or a time-domain OCC may be adjusted to a level similar to that of a general NPUSCH to which an OCC is not applied.

For example, in order to support DMRS TDM for a DMRS sequence for a conventional NPUSCH to which an OCC is not applied and/or for a time-domain OCC (e.g., for cell randomization), a sequence and/or a time-domain OCC may be sequentially mapped/applied to DMRS symbol locations at which an actual DMRS is transmitted.

For example, a form in which a UE transmits a TDM-based DMRS for an NPUSCH or transmits an actual DMRS only for some DMRS symbols among all DMRS symbols may be limited to a case in which a base station uses another NPUSCH transmission that uses the same resource in a time-frequency domain as the NPUSCH transmission or uses a resource entirely or partially overlapping therewith.

When only a single OCC is applied, if there are DMRS sequences from a plurality of cells, there may be a problem in that the DMRS sequences may be mistaken as DMRSs of the same cell.

FIG. 11 shows a procedure related to a DMRS, based on an embodiment of the present disclosure. The embodiment of FIG. 11 may be combined with various embodiments of the present disclosure.

Referring to FIG. 11, in step S1110, a first device may obtain a first DMRS sequence by applying a first OCC to a random sequence. For example, the first device may be a UE. For example, the first device may be a UE related to NTN. For example, a second device may be a base station. For example, the second device may be a base station related to NTN. In step S1120, the first device may obtain a second DMRS sequence by applying a second OCC to the first DMRS sequence. In step S1130, the first device may transmit, to the second device, a DMRS on an NPUSCH based on the second DMRS sequence.

For example, the reference signal sequence *r̅ᵤ*(*n*) for ${N}_{sc}^{RU} = 1$1 may be defined as follows. For example, *r̅ᵤ*(*n*) may include the first DMRS sequence.${\overline{r}}_{u} \left(n\right) = \frac{1}{\sqrt{2}} \left(1+j\right) \left(1-2c\left(n\right)\right) w \left(n mod 16\right) , 0 \leq n < {M}_{rep}^{NPUSCH} {N}_{slots}^{UL} {N}_{RU}$

For example, where the binary sequence *c*(*n*) may be defined by clause 7.2 of 3GPP TS 36.211 and may be initialised with *c*ᵢₙᵢₜ = 35 at the start of the NPUSCH transmission. For example, the quantity *w*(*n*) may be given by Table 7 where $u = {N}_{ID}^{Ncell} mod 16$ for NPUSCH format 2, and for NPUSCH format 1 if group hopping is not enabled, and by clause 1.1.4.1.3 if group hopping is enabled for NPUSCH format 1. For example, the quantity *w*(*n*) may be independently configured based on a cell ID.

For example, when a UE supports CDM within the same cell for an NPUSCH DMRS using an OCC or a similar scheme, a DMRS sequence may be repeated according to a length of the OCC, and the repetition scheme may be a scheme in which the same sequence value is mapped for the same OCC code.

For example, for an NPUSCH format 1 single-tone 15 kHz SCS, for CDM DMRS with a legacy pattern, OCC may be applied according to the following equation. For example, DMRS symbols may be spread before the OCC is applied.${\overline{r}}_{u , OCC} \left(n\right) = {\overline{r}}_{u} \left(\left⌊\frac{n}{M}\right⌋\right) q \left(n mod M\right)$

For example, where: M may be an OCC length, q may be an OCC codeword allocated to a UE, and ***r̅ᵤ***(***n***) may be a reference signal sequence defined in clause 1.1.4.1.1. For example, ***r̅_{u,OCC}*(*n*)** may include the second DMRS sequence. For example, M may be 2. For example, q may be independently configured per a cell ID.

For example, for an NPUSCH format 1 single-tone 15 kHz SCS, for CDM DMRS with a legacy pattern, OCC may be applied according to the following equation. For example, OCC may be applied to the legacy complex-valued DMRS symbol used in slot 1 and slot 2. For example, DMRS symbols may not be spread before the OCC is applied.${\overline{r}}_{u , OCC} \left(n\right) = {\overline{r}}_{u} \left(n\right) q \left(n mod M\right)$

For example, where: M may be an OCC length, q may be an OCC codeword allocated to a UE, and ***r̅ᵤ***(***n***) may be a reference signal sequence defined in clause 1.1.4.1.1. For example, ***r̅_{u,OCC}*(*n*)** may include the second DMRS sequence. For example, M may be 2. For example, q may be independently configured per a cell ID.

For example, for an NPUSCH format 1 single-tone 15 kHz SCS, for CDM DMRS with a legacy pattern, OCC may be applied to the complex-valued DMRS symbol used in slot 1 and slot 2. For example, depending on the OCC codeword, different DMRS sequence may be used. For example, DMRS symbols may not be spread before the OCC is applied.

For example, for an NPUSCH format 1 single-tone 15 kHz SCS, for CDM DMRS with a legacy pattern, DMRS symbols may not be spread and OCC may not be applied. For example, legacy complex-valued DMRS symbol may be used in slots corresponding to an OCC codeword of NPUSCH. For example, different DMRS sequences may be used for multiplexed UEs.

In an embodiment of the present disclosure, application of a time-domain OCC may be extended/interpreted as application across slots and/or application within a slot and/or application within a subframe and/or application across NPUSCH repetitions.

By applying a dual OCC, even if there are DMRS sequences from a plurality of cells, there may be an effect of distinguishing the DMRS sequences without mistaking them as DMRSs of the same cell. By applying a dual OCC to a DMRS sequence, the present method may enable DMRS sequences generated from a plurality of cells to be clearly distinguished. Specifically, by applying a second OCC consecutively after applying a first OCC, a DMRS sequence of each cell may maintain unique characteristics even in a dense network environment. This may enable DMRS sequences of respective cells to be independently identified even when multiple cells overlap or transmit similar DMRS patterns. Application of the dual OCC may generate a more complex and unique DMRS signature for each cell, thereby enabling a receiver to more easily and accurately identify and distinguish signals originating from different cells, which may be related to improved distinguishability. By enabling a DMRS sequence to be uniquely identifiable, overall network performance may be improved by minimizing a possibility of interference caused by overlapping reference signals generated from adjacent cells, which may be related to reduction of intercell interference. When DMRS sequences can be distinguished, channel estimation and demodulation may become more precise, thereby improving data integrity and reliability of a communication link, which may be related to improvement of signal integrity and reliability. The ability to uniquely identify DMRS sequences originating from a plurality of cells may support scalability, thereby enabling efficient management of reference signals in a dense cell deployment environment, which may be related to scalability in a dense network. The dual OCC approach may provide flexibility for allocating DMRS sequences according to various network topologies and configurations, thereby accommodating various network settings without impairing uniqueness of reference signals, which may be related to flexibility of network configuration. In summary, by applying a dual OCC to a DMRS sequence, significant advantages can be achieved in ensuring that reference signals of respective cells are distinguishable in a multi-cell environment. This may not only improve robustness and efficiency of a communication system but also support deployment of a dense network having improved performance and reliability.

The proposed method may be applied to an apparatus described below. First, a processor 202 of a receiving UE may configure at least one bandwidth part (BWP). Then, the processor 202 of the receiving UE may control a transceiver 206 of the receiving UE to receive, from a transmitting UE, a physical channel related to inter-UE communication (e.g., SL communication) and/or a reference signal related to inter-UE communication (e.g., SL communication) on the at least one BWP.

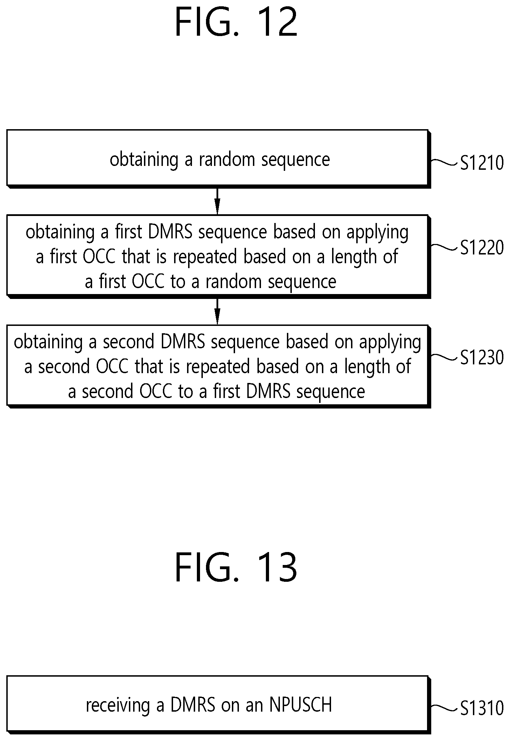

FIG. 12 shows a method for a first device to perform wireless communication, based on an embodiment of the present disclosure. The embodiment of FIG. 12 may be combined with various embodiments of the present disclosure.

Referring to FIG. 12, in step S1210, the first device may obtain a random sequence. In step S1220, the first device may obtain a first demodulation reference signal (DMRS) sequence based on applying a first orthogonal cover code (OCC) that is repeated based on a length of the first OCC to the random sequence. In step S1230, the first device may obtain a second DMRS sequence based on applying a second OCC that is repeated based on a length of the second OCC to the first DMRS sequence.

For example, the first DMRS sequence mayj include one sequence. For example, a portion of the second DMRS sequence may be obtained based on applying the second OCC to the one sequence.

For example, the portion of the second DMRS sequence may include a plurality of sequences.

For example, the portion of the second DMRS sequence may include one sequence that is independent of the one sequence included in the first DMRS sequence.

For example, the second DMRS sequence may be obtained based on a portion of the first DMRS sequence.

For example, a number of the portion of the first DMRS sequence may be determined based on the length of the second OCC.

For example, the number of the portion of the first DMRS sequence may be determined based on dividing a number of the second DMRS sequence by the length of the second OCC.

For example, the first device may transmit a DMRS on a narrow physical uplink shared channel (NPUSCH), based on the second DMRS sequence.

For example, the length of the first OCC may be 16.

For example, the first OCC may be based on a cell identity (ID).

For example, the first OCC and the second OCC may be independently configured.

For example, the second OCC may be related to code division multiplexing (CDM).

The proposed method can be applied to the device, based on various embodiments of the present disclosure. First, the processor 102 of the first device 100 may obtain a random sequence. In addition, the processor 102 of the first device 100 may obtain a first demodulation reference signal (DMRS) sequence based on applying a first orthogonal cover code (OCC) that is repeated based on a length of the first OCC to the random sequence. In addition, the processor 102 of the first device 100 may obtain a second DMRS sequence based on applying a second OCC that is repeated based on a length of the second OCC to the first DMRS sequence.

Based on an embodiment of the present disclosure, a first device may be provided. For example, the first device may include: obtaining a random sequence; obtaining a first demodulation reference signal (DMRS) sequence based on applying a first orthogonal cover code (OCC) that is repeated based on a length of the first OCC to the random sequence; and obtaining a second DMRS sequence based on applying a second OCC that is repeated based on a length of the second OCC to the first DMRS sequence.

Based on an embodiment of the present disclosure, a processing device adapted to control a first device may be provided. The processing device may include: at least one processor; and at least one memory connected to the at least one processor and storing instructions. For example, the instructions, based on being executed by the at least one processor, may cause the first device to perform operations comprising: obtaining a random sequence; obtaining a first demodulation reference signal (DMRS) sequence based on applying a first orthogonal cover code (OCC) that is repeated based on a length of the first OCC to the random sequence; and obtaining a second DMRS sequence based on applying a second OCC that is repeated based on a length of the second OCC to the first DMRS sequence.

Based on an embodiment of the present disclosure, a non-transitory computer-readable storage medium storing instructions may be provided. For example, the instructions, based on being executed, may cause a first device to perform operations comprising: obtaining a random sequence; obtaining a first demodulation reference signal (DMRS) sequence based on applying a first orthogonal cover code (OCC) that is repeated based on a length of the first OCC to the random sequence; and obtaining a second DMRS sequence based on applying a second OCC that is repeated based on a length of the second OCC to the first DMRS sequence.

FIG. 13 shows a method for a second device to perform wireless communication, based on an embodiment of the present disclosure. The embodiment of FIG. 13 may be combined with various embodiments of the present disclosure.

Referring to FIG. 13, in step S1310, the second device may receive a demodulation reference signal (DMRS) on a narrow physical uplink shared channel (NPUSCH). For example, the DMRS may be based on a second DMRS sequence. For example, the second DMRS sequence may be obtained based on applying the second OCC that is repeated based on a length of the second OCC to a first DMRS sequence. For example, the first DMRS sequence may be obtained based on applying the first OCC that is repeated based on a length of the first OCC to a random sequence.

For example, the first DMRS sequence mayj include one sequence. For example, a portion of the second DMRS sequence may be obtained based on applying the second OCC to the one sequence.

For example, the portion of the second DMRS sequence may include a plurality of sequences.

For example, the portion of the second DMRS sequence may include one sequence that is independent of the one sequence included in the first DMRS sequence.

For example, the second DMRS sequence may be obtained based on a portion of the first DMRS sequence.

For example, a number of the portion of the first DMRS sequence may be determined based on the length of the second OCC.

For example, the number of the portion of the first DMRS sequence may be determined based on dividing a number of the second DMRS sequence by the length of the second OCC.

For example, the length of the first OCC may be 16.

For example, the first OCC may be based on a cell identity (ID).

For example, the first OCC and the second OCC may be independently configured.

For example, the second OCC may be related to code division multiplexing (CDM).

Various embodiments of the present disclosure may be combined with each other.

Hereinafter, device(s) to which various embodiments of the present disclosure can be applied will be described.

The proposed method can be applied to the device, based on various embodiments of the present disclosure. First, the processor 202 of the second device 200 may control the transceiver 206 to receive a demodulation reference signal (DMRS) on a narrow physical uplink shared channel (NPUSCH). For example, the DMRS may be based on a second DMRS sequence. For example, the second DMRS sequence may be obtained based on applying the second OCC that is repeated based on a length of the second OCC to a first DMRS sequence. For example, the first DMRS sequence may be obtained based on applying the first OCC that is repeated based on a length of the first OCC to a random sequence.

Based on an embodiment of the present disclosure, a second device may be provided. For example, the second device may include: at least one transceiver; at least one processor; and at least one memory connected to the at least one processor and storing instructions. For example, the instructions, based on being executed by the at least one processor, may cause the second device to perform operations comprising: receiving a demodulation reference signal (DMRS) on a narrow physical uplink shared channel (NPUSCH). For example, the DMRS may be based on a second DMRS sequence. For example, the second DMRS sequence may be obtained based on applying the second OCC that is repeated based on a length of the second OCC to a first DMRS sequence. For example, the first DMRS sequence may be obtained based on applying the first OCC that is repeated based on a length of the first OCC to a random sequence.

Based on an embodiment of the present disclosure, a processing device adapted to control a second device may be provided. The processing device may include: at least one processor; and at least one memory connected to the at least one processor and storing instructions. For example, the instructions, based on being executed by the at least one processor, may cause the second device to perform operations comprising: receiving a demodulation reference signal (DMRS) on a narrow physical uplink shared channel (NPUSCH). For example, the DMRS may be based on a second DMRS sequence. For example, the second DMRS sequence may be obtained based on applying the second OCC that is repeated based on a length of the second OCC to a first DMRS sequence. For example, the first DMRS sequence may be obtained based on applying the first OCC that is repeated based on a length of the first OCC to a random sequence.

Based on an embodiment of the present disclosure, a non-transitory computer-readable storage medium storing instructions may be provided. For example, the instructions, based on being executed, may cause a second device to perform operations comprising: receiving a demodulation reference signal (DMRS) on a narrow physical uplink shared channel (NPUSCH). For example, the DMRS may be based on a second DMRS sequence. For example, the second DMRS sequence may be obtained based on applying the second OCC that is repeated based on a length of the second OCC to a first DMRS sequence. For example, the first DMRS sequence may be obtained based on applying the first OCC that is repeated based on a length of the first OCC to a random sequence.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

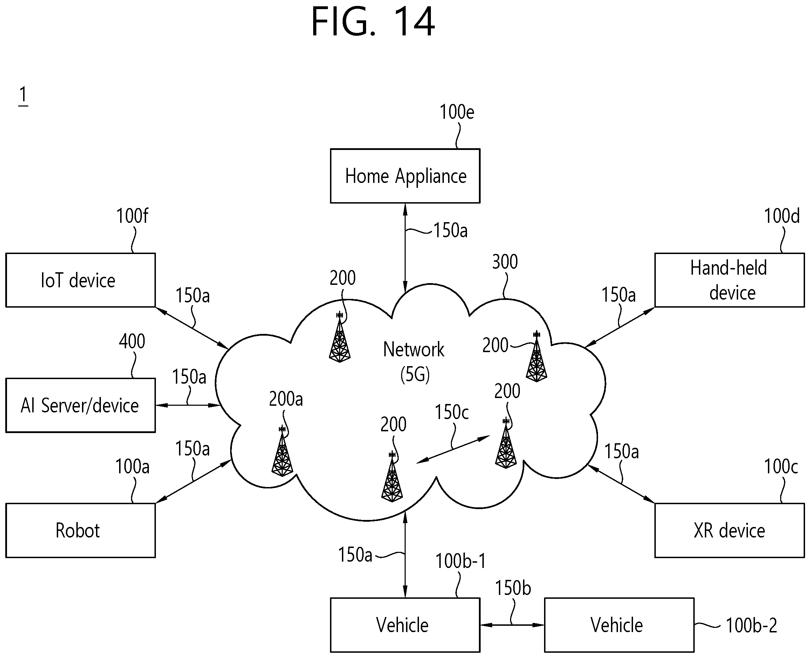

FIG. 14 shows a communication system 1, based on an embodiment of the present disclosure. The embodiment of FIG. 14 may be combined with various embodiments of the present disclosure.

Referring to FIG. 14, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

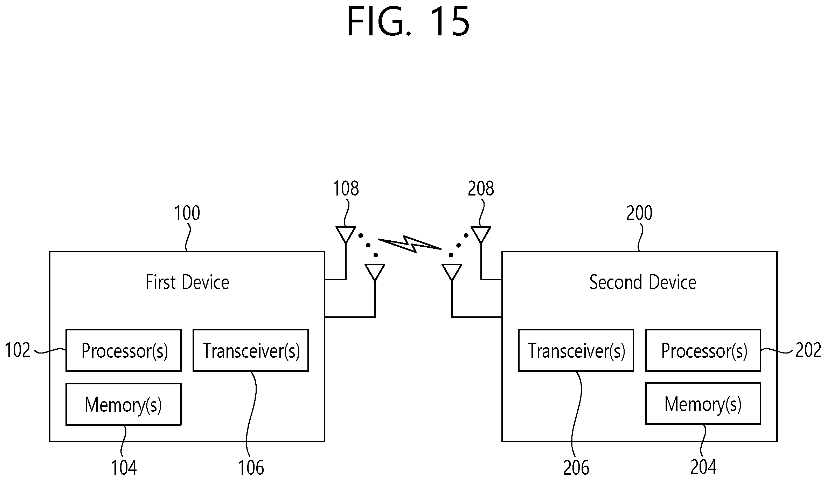

FIG. 15 shows wireless devices, based on an embodiment of the present disclosure. The embodiment of FIG. 15 may be combined with various embodiments of the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

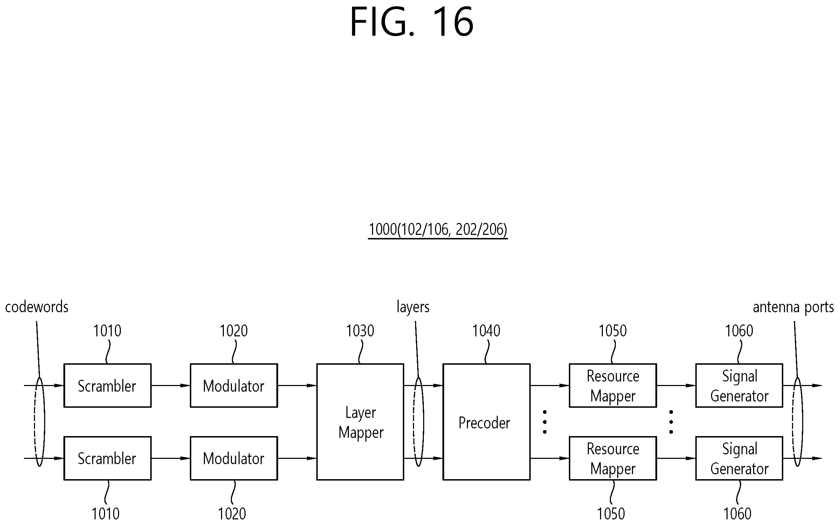

FIG. 16 shows a signal process circuit for a transmission signal, based on an embodiment of the present disclosure. The embodiment of FIG. 16 may be combined with various embodiments of the present disclosure.

Referring to FIG. 16, a signal processing circuit 1000 may include scramblers 1010, modulators 1020, a layer mapper 1030, a precoder 1040, resource mappers 1050, and signal generators 1060. An operation/function of FIG. 16 may be performed, without being limited to, the processors 102 and 202 and/or the transceivers 106 and 206 of FIG. 15. Hardware elements of FIG. 16 may be implemented by the processors 102 and 202 and/or the transceivers 106 and 206 of FIG. 15. For example, blocks 1010 to 1060 may be implemented by the processors 102 and 202 of FIG. 15. Alternatively, the blocks 1010 to 1050 may be implemented by the processors 102 and 202 of FIG. 15 and the block 1060 may be implemented by the transceivers 106 and 206 of FIG. 15.

Codewords may be converted into radio signals via the signal processing circuit 1000 of FIG. 16. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 16. For example, the wireless devices (e.g., 100 and 200 of FIG. 15) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

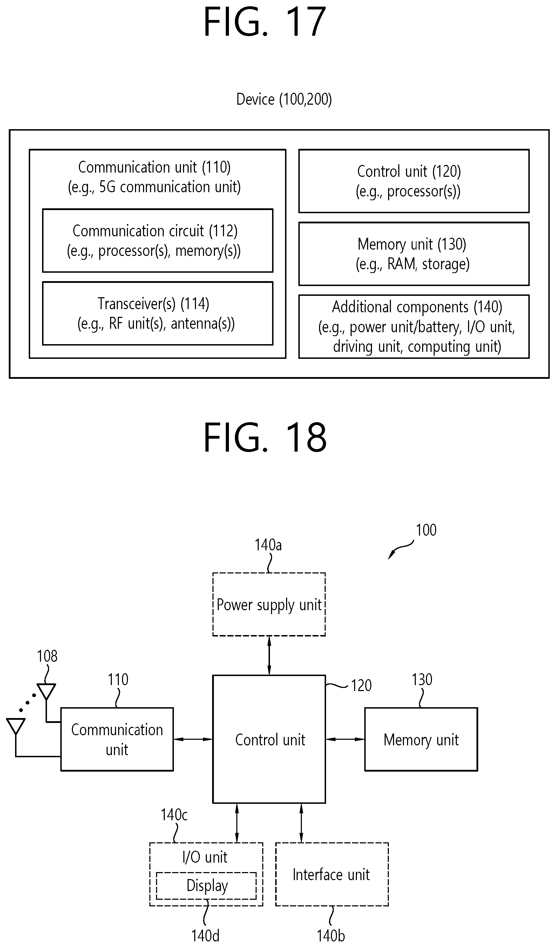

FIG. 17 shows another example of a wireless device, based on an embodiment of the present disclosure. The wireless device may be implemented in various forms according to a use-case/service (refer to FIG. 14). The embodiment of FIG. 17 may be combined with various embodiments of the present disclosure.

Referring to FIG. 17, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 17 will be described in detail with reference to the drawings.

FIG. 18 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 18 may be combined with various embodiments of the present disclosure.

Referring to FIG. 18, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 17, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

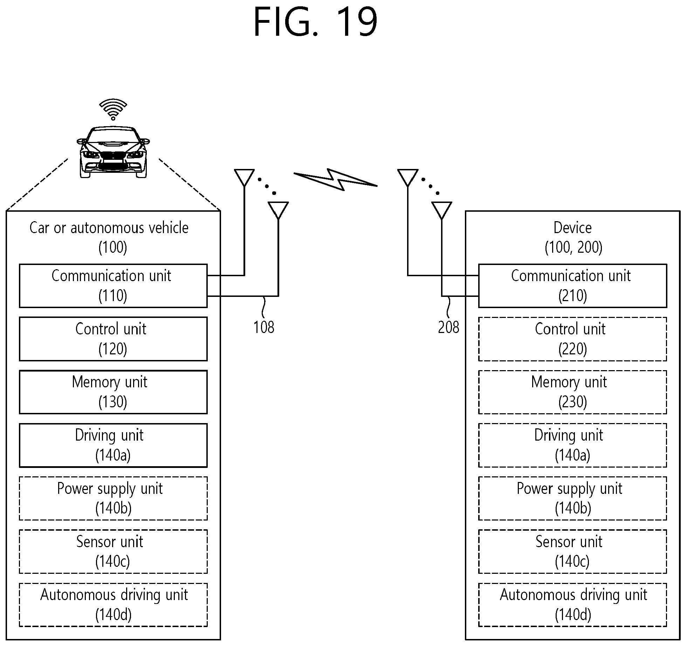

FIG. 19 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 19 may be combined with various embodiments of the present disclosure.

Referring to FIG. 19, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method, comprising:
obtaining a random sequence;
obtaining a first demodulation reference signal (DMRS) sequence based on applying a first orthogonal cover code (OCC) that is repeated based on a length of the first OCC to the random sequence; and
obtaining a second DMRS sequence based on applying a second OCC that is repeated based on a length of the second OCC to the first DMRS sequence.

2. The method of claim 1,
wherein the first DMRS sequence includes one sequence, and
wherein a portion of the second DMRS sequence is obtained based on applying the second OCC to the one sequence.

3. The method of claim 2,
wherein the portion of the second DMRS sequence includes a plurality of sequences.

4. The method of claim 2,
wherein the portion of the second DMRS sequence includes one sequence that is independent of the one sequence included in the first DMRS sequence.

5. The method of claim 1,
wherein the second DMRS sequence is obtained based on a portion of the first DMRS sequence.

6. The method of claim 5,
wherein a number of the portion of the first DMRS sequence is determined based on the length of the second OCC.

7. The method of claim 6,
wherein the number of the portion of the first DMRS sequence is determined based on dividing a number of the second DMRS sequence by the length of the second OCC.

8. The method of claim 1, further comprising:
transmitting a DMRS on a narrow physical uplink shared channel (NPUSCH), based on the second DMRS sequence.

9. The method of claim 1,
wherein the length of the first OCC is 16.

10. The method of claim 1,
wherein the first OCC is based on a cell identity (ID).

11. The method of claim 1,
wherein the first OCC and the second OCC are independently configured.

12. The method of claim 1,
wherein the second OCC is related to code division multiplexing (CDM).

13. The method of claim 1,
wherein the method is performed by a first device.

14. A first device, comprising:
at least one transceiver;
at least one processor; and
at least one memory connected to the at least one processor and storing instructions that, based on being executed by the at least one processor, cause the first device to perform operations comprising:
obtaining a random sequence;
obtaining a first demodulation reference signal (DMRS) sequence based on applying a first orthogonal cover code (OCC) that is repeated based on a length of the first OCC to the random sequence; and
obtaining a second DMRS sequence based on applying a second OCC that is repeated based on a length of the second OCC to the first DMRS sequence.

15. A processing device adapted to control a first device, the processing device comprising:
at least one processor; and
at least one memory connected to the at least one processor and storing instructions that, based on being executed by the at least one processor, cause the first device to perform operations comprising:
obtaining a random sequence;
obtaining a first demodulation reference signal (DMRS) sequence based on applying a first orthogonal cover code (OCC) that is repeated based on a length of the first OCC to the random sequence; and
obtaining a second DMRS sequence based on applying a second OCC that is repeated based on a length of the second OCC to the first DMRS sequence.

16. A non-transitory computer-readable storage medium storing instructions that, based on being executed, cause a first device to perform operations comprising:
obtaining a random sequence;
obtaining a first demodulation reference signal (DMRS) sequence based on applying a first orthogonal cover code (OCC) that is repeated based on a length of the first OCC to the random sequence; and
obtaining a second DMRS sequence based on applying a second OCC that is repeated based on a length of the second OCC to the first DMRS sequence.

17. A method, comprising:
receiving a demodulation reference signal (DMRS) on a narrow physical uplink shared channel (NPUSCH),
wherein the DMRS is based on a second DMRS sequence,
wherein the second DMRS sequence is obtained based on applying the second OCC that is repeated based on a length of the second OCC to a first DMRS sequence, and
wherein the first DMRS sequence is obtained based on applying the first OCC that is repeated based on a length of the first OCC to a random sequence.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
receiving a demodulation reference signal (DMRS) on a narrow physical uplink shared channel (NPUSCH),
wherein the DMRS is based on a second DMRS sequence,
wherein the second DMRS sequence is obtained based on applying the second OCC that is repeated based on a length of the second OCC to a first DMRS sequence, and
wherein the first DMRS sequence is obtained based on applying the first OCC that is repeated based on a length of the first OCC to a random sequence.

19. A processing device adapted to control a second device, the processing device comprising:
at least one processor; and
at least one memory connected to the at least one processor and storing instructions that, based on being executed by the at least one processor, cause the second device to perform operations comprising:
receiving a demodulation reference signal (DMRS) on a narrow physical uplink shared channel (NPUSCH),
wherein the DMRS is based on a second DMRS sequence,
wherein the second DMRS sequence is obtained based on applying the second OCC that is repeated based on a length of the second OCC to a first DMRS sequence, and
wherein the first DMRS sequence is obtained based on applying the first OCC that is repeated based on a length of the first OCC to a random sequence.

20. A non-transitory computer-readable storage medium storing instructions that, based on being executed, cause a second device to perform operations comprising:
receiving a demodulation reference signal (DMRS) on a narrow physical uplink shared channel (NPUSCH),
wherein the DMRS is based on a second DMRS sequence,
wherein the second DMRS sequence is obtained based on applying the second OCC that is repeated based on a length of the second OCC to a first DMRS sequence, and
wherein the first DMRS sequence is obtained based on applying the first OCC that is repeated based on a length of the first OCC to a random sequence.
